# EUROPEAN PATENT APPLICATION

(11) **EP 4 841 711 A1**
(43) Date of publication of application: **18.11.2026**
(21) Application number: 25760824.0
(22) Date of filing: 20.02.2025
(51) Int. Cl.: H01M 4/525, H01M 4/505, H01M 10/05

(54) **SODIUM-ION BATTERY POSITIVE-ELECTRODE MATERIAL, AND PREPARATION METHOD THEREFOR AND PRECURSOR AND APPLICATION THEREOF**

(30) Priority: 29.02.2024 CN 202410234500
(71) Applicant: Huawei Technologies Co., Ltd., Shenzhen, Guangdong 518129 (CN)
(72) Inventor: KONG, Xiangbang, Shenzhen, Guangdong 518129 (CN); ZHU, Changbao, Shenzhen, Guangdong 518129 (CN); XU, Ruoyu, Shenzhen, Guangdong 518129 (CN)
(74) Representative: Gill Jennings & Every LLP
(86) International application number: PCT/CN2025/078191
(87) International publication number: WO 2025/180282

(57) **Abstract**

Embodiments of this application provide a sodium-ion battery positive electrode material, and a preparation method, precursor, and application thereof. The sodium-ion battery positive electrode material includes a sodium-based metal oxide, an X-ray diffraction spectrum of the material includes diffraction peaks of the following 12 crystal planes: (003), (006), (101), (012), (104), (107), (018), (110), (113), (1010), (116), and (024), and a ratio of a peak area of the diffraction peak of the crystal plane (003) to a sum of peak areas of the diffraction peaks of the 12 crystal planes is less than 25%. The positive electrode material that meets the foregoing conditions has a high particle sphericity and a rounded structure, such that the material achieves a high compaction density and good kinetic performance, thereby facilitating increase of an energy density and improvement of rate performance of a sodium-ion battery.

## Description

This application claims priority to Chinese Patent Application No. 202410234500.5, filed with the China National Intellectual Property Administration on February 29, 2024 and entitled "SODIUM-ION BATTERY POSITIVE ELECTRODE MATERIAL, AND PREPARATION METHOD, PRECURSOR, AND APPLICATION THEREOF", which is incorporated herein by reference in its entirety.

### TECHNICAL FIELD

Embodiments of this application relate to the field of sodium-ion battery technologies, and specifically, to a sodium-ion battery positive electrode material, and a preparation method, precursor, and application thereof.

### BACKGROUND

Due to abundant reserves and low costs of sodium resources on the Earth, sodium-ion batteries can be manufactured at low costs and are therefore more likely to meet future demands for low-cost large-scale energy storage devices. Layered sodium-based transition metal oxides are widely used as positive electrode materials in sodium-ion batteries. However, such materials typically exhibit a flat plate-like morphology, resulting in a low compaction density and consequently a low energy density of the sodium-ion batteries. In addition, electrochemical activity of such materials is mainly associated with surfaces along a thickness direction of the plate-like structure, and the surfaces have a small exposed area, resulting in poor kinetic performance. Therefore, it is necessary to provide a sodium-ion battery positive electrode material that can achieve a high compaction density and good kinetic performance.

### SUMMARY

In view of this, this application provides a sodium-ion battery positive electrode material, and a preparation method, precursor, and application thereof, so that a sodium-ion battery using the sodium-ion battery positive electrode material can achieve a high energy density and good rate performance.

Specifically, a first aspect of embodiments of this application provides a sodium-ion battery positive electrode material. The sodium-ion battery positive electrode material includes a sodium-based metal oxide, an X-ray diffraction spectrum of the sodium-ion battery positive electrode material includes diffraction peaks of the following 12 crystal planes: (003), (006), (101), (012), (104), (107), (018), (110), (113), (1010), (116), and (024), and a ratio of a peak area of the diffraction peak of the crystal plane (003) to a sum of peak areas of the diffraction peaks of the 12 crystal planes is less than 25%.

In the foregoing sodium-ion battery positive electrode material, a proportion of the area of the diffraction peak corresponding to the inactive flat crystal plane (003) is low, and the positive electrode material tends to have rounded particles with a high sphericity, so that an exposure degree of electrochemically active planes of the positive electrode material is increased, and kinetic performance of the positive electrode material can be improved. In addition, the positive electrode material has a high compaction density, which is conducive to increasing an energy density of a sodium-ion battery; and uniformity of sodium ion deintercalation of the positive electrode material is improved, which is conducive to improving cycling performance of the sodium-ion battery.

In some implementations of this application, the ratio of the peak area of the diffraction peak of the crystal plane (003) to the sum of the peak areas of the diffraction peaks of the 12 crystal planes is less than or equal to 23%. In this case, the sodium-ion battery positive electrode material exhibits a more rounded apparent morphology and better kinetic performance.

In an implementation of this application, a ratio of the peak area of the diffraction peak of the crystal plane (003) to a sum of the peak areas of the diffraction peaks of the crystal plane (012) and the crystal plane (110) is less than 1.6. A ratio of a diffraction peak area of a characteristic inactive crystal plane to a diffraction peak area of a characteristic active crystal plane of the sodium-ion battery positive electrode material being within this range can reflect that the material exhibits low orientation of the crystal plane (003) and a rounded morphological structure, thereby facilitating sodium ion deintercalation and resulting in good electrochemical performance.

In an implementation of this application, the sodium-ion battery positive electrode material is single-crystal or single-crystal-like particles.

In an implementation of this application, an average particle sphericity of the sodium-ion battery positive electrode material is greater than or equal to 0.85. A high average particle sphericity can reflect that the sodium-ion battery positive electrode material is particles with a rounded morphology, an exposure degree of electrochemically active planes of the sodium-ion battery positive electrode material is increased, and kinetic performance of the sodium-ion battery positive electrode material can be significantly improved. In addition, the sodium-ion battery positive electrode material can achieve dense packing and a high compaction density, thereby facilitating increase of an energy density of a sodium-ion battery; and uniformity of sodium ion deintercalation of the sodium-ion battery positive electrode material is improved, thereby facilitating improvement of cycling performance of the battery.

In an implementation of this application, in the sodium-ion battery positive electrode material, a quantity proportion of particles with a particle sphericity less than 0.85 is less than 30%. Particles with a low sphericity in the sodium-ion battery positive electrode material account for a small quantity proportion of particles in the overall sodium-ion battery positive electrode material, thereby ensuring a high average particle sphericity, better kinetic performance, and a high compaction density for the material.

In an implementation of this application, an aspect ratio of the particles with a particle sphericity less than 0.85 is within a range greater than 1 and less than 3. Even though particles with a relatively low sphericity are present, their aspect ratios remain low and are far lower than those of conventional flat plate-like materials. These particles exhibit a relatively rounded apparent morphology, and their presence does not significantly affect the kinetic performance or compaction density of the positive electrode material.

In an implementation of this application, an average particle size of the sodium-ion battery positive electrode material is within a range of 2 µm to 20 µm. This can avoid lengthening of a sodium-ion diffusion path and deterioration of rate performance of the material that are caused by an excessively large average particle size of the positive electrode material, and further avoid a low compaction density of the material caused by an excessively small average particle size of the positive electrode material.

In an implementation of this application, the sodium-ion battery positive electrode material further includes a coating layer coated on a surface of the sodium-based metal oxide. Presence of the coating layer can improve air stability and cycling stability of the sodium-ion battery positive electrode material.

In an implementation of this application, a compaction density of the sodium-ion battery positive electrode material at 200 MPa is 3.1 g/mL or above. The sodium-ion battery positive electrode material meets the foregoing XRD spectrum characteristics, morphology and size characteristics, and the like in this application, and exhibits a rounded apparent structure, thereby achieving a high compaction density and enabling a sodium-ion battery with a high energy density.

A second aspect of embodiments of this application provides a sodium-ion battery positive electrode material. The sodium-ion battery positive electrode material includes a sodium-based metal oxide, and an average particle sphericity of the sodium-ion battery positive electrode material is greater than or equal to 0.85.

A high average particle sphericity can reflect that the sodium-ion battery positive electrode material is particles with a rounded morphology, an exposure degree of electrochemically active planes of the sodium-ion battery positive electrode material is increased, and kinetic performance of the sodium-ion battery positive electrode material can be significantly improved. In addition, the sodium-ion battery positive electrode material can achieve dense packing and a high compaction density, thereby facilitating increase of an energy density of a sodium-ion battery; and uniformity of sodium ion deintercalation of the sodium-ion battery positive electrode material is improved, thereby facilitating improvement of cycling performance of the battery.

In an implementation of this application, an X-ray diffraction spectrum of the sodium-ion battery positive electrode material includes diffraction peaks of the following 12 crystal planes: (003), (006), (101), (012), (104), (107), (018), (110), (113), (1010), (116), and (024), and a ratio of a peak area of the diffraction peak of the crystal plane (003) to a sum of peak areas of the diffraction peaks of the 12 crystal planes is less than 25%.

A third aspect of embodiments of this application provides a sodium-ion battery positive electrode material precursor. The sodium-ion battery positive electrode material precursor includes a sodium-based metal oxide precursor, where an internal porosity of the sodium-ion battery positive electrode material precursor is greater than or equal to 10%, and/or a specific surface area of the sodium-ion battery positive electrode material precursor is greater than or equal to 25 m²/g.

When the positive electrode material precursor meeting the foregoing requirements is calcined with a sodium source, the molten sodium source can readily penetrate into an interior of the precursor to achieve uniform and rapid sodiation, thereby suppressing excessive orientation of the flat crystal plane (003) in an obtained positive electrode material and enabling the positive electrode material to exhibit a high sphericity.

In an implementation of this application, the sodium-ion battery positive electrode material precursor is secondary particles, and a particle size of the secondary particles is within a range of 1 µm to 20 µm. When the sodium-ion battery positive electrode material precursor has a particle size within a proper range, it is conducive to ensuring that a positive electrode material formed after calcination with a sodium source has a proper particle size, thereby achieving a high compaction density, good rate performance, and the like.

A fourth aspect of embodiments of this application provides a preparation method of a sodium-ion battery positive electrode material, including the following steps:
mixing the sodium-ion battery positive electrode material precursor according to the third aspect of embodiments of this application with a sodium source, followed by calcination to obtain the sodium-ion battery positive electrode material.

Preparation of the positive electrode material by using the sodium-ion battery positive electrode material precursor meeting the specific requirements of this application features a simple process and ease of operations, and can ensure that the obtained positive electrode material meets the foregoing requirements of this application with respect to XRD spectrum characteristics and an average particle sphericity of 0.85 or above.

In an implementation of this application, a temperature of the calcination is 850°C to 1000°C, a time of the calcination is 6 to 30 hours, and an atmosphere of the calcination is an oxygen atmosphere or an air atmosphere.

In some implementations of this application, the calcination includes: calcination at a first temperature for first duration, followed by cooling to a second temperature and calcination for second duration, where the first duration is less than the second duration. Such a calcination process is more conducive to preparing a positive electrode material having a regular morphology and high crystallinity.

A fifth aspect of embodiments of this application provides a positive electrode plate. The positive electrode plate includes a positive electrode current collector and a positive electrode material layer disposed on at least one side of the positive electrode current collector, and the positive electrode material layer includes the sodium-ion battery positive electrode material according to the first aspect or the second aspect of embodiments of this application, or includes the sodium-ion battery positive electrode material prepared according to the preparation method according to the fourth aspect of embodiments of this application.

The sodium-ion battery positive electrode material has a high compaction density, so that the positive electrode plate also has a high compaction density, and a sodium-ion battery has a high energy density. In addition, as the sodium-ion battery positive electrode material has good kinetic performance and high uniformity of sodium ion deintercalation, a sodium-ion battery with superior rate performance and good cycling performance can be prepared by using the positive electrode plate.

A fifth aspect of embodiments of this application provides a sodium-ion battery. The sodium-ion battery includes a negative electrode plate and the positive electrode plate according to the fifth aspect of embodiments of this application. The sodium-ion battery further includes a separator and a liquid electrolyte that are located between the positive electrode plate and the negative electrode plate. As the sodium-ion battery uses the foregoing sodium-ion battery positive electrode material, the sodium-ion battery can have a high energy density, good rate performance, and good cycling stability.

A sixth aspect of embodiments of this application provides a power-consuming device. The power-consuming device includes a power-consuming component and a power supply component, the power supply component supplies power to the power-consuming component, and the power supply component includes the sodium-ion battery according to the fifth aspect of embodiments of this application. The power-consuming device includes an electronic device or a powered mobile apparatus.

The sodium-ion battery provided in embodiments of this application is used to supply power to the power-consuming device, so that use experience and market competitiveness of a product can be improved.

A seventh aspect of embodiments of this application provides an energy storage system. The energy storage system includes at least one battery group, and the battery group includes a plurality of sodium-ion batteries according to the fifth aspect of embodiments of this application. The sodium-ion battery used in the energy storage system has a high energy density, good rate performance, and good cycling stability, so that the energy storage system has more superior energy storage characteristics.

### BRIEF DESCRIPTION OF DRAWINGS

FIG. 1 is a diagram of a structure of a positive electrode plate according to an embodiment of this application;
FIG. 2 is a diagram of a structure of a sodium-ion battery according to an embodiment of this application;
FIG. 3 is a diagram of a structure of an electronic device according to an embodiment of this application;
FIG. 4 is a diagram of a structure of a mobile apparatus according to an embodiment of this application;
FIG. 5 is a diagram of a structure of an energy storage system according to an embodiment of this application;
FIG. 6 summarizes cross-sectional scanning electron microscope (Scanning electron microscope, SEM) photos of positive electrode material precursors prepared in Examples 1 and 2 and Comparative Examples 1 to 3 of this application;
FIG. 7 summarizes SEM photos of positive electrode materials prepared in Examples 1 and 2 and Comparative Examples 1 to 3 of this application;
FIG. 8A to FIG. 8E summarize particle sphericality test results of positive electrode materials prepared in Examples 1 and 2 and Comparative Examples 1 to 3 of this application;
FIG. 9 summarizes XRD spectra of positive electrode materials prepared in Examples 1 and 2 and Comparative Examples 1 to 3 of this application;
FIG. 10 summarizes powder compaction density curves of positive electrode materials prepared in Examples 1 and 2 and Comparative Examples 1 to 3 of this application;
FIG. 11 summarizes first-cycle charge-discharge curves of sodium-ion coin cells assembled by using positive electrode materials in Examples 1 and 2 and Comparative Examples 1 to 3 of this application;
FIG. 12 summarizes rate performance test results of coin cells in Example 2 and Comparative Examples 1 and 3;
FIG. 13A and FIG. 13B summarize test results of galvanostatic intermittent titration tests of coin cells in Example 2 and Comparative Examples 1 and 3; and
FIG. 14 summarizes cycling performance test results of sodium-ion pouch cells assembled by using positive electrode materials in Examples 1 and 2 and Comparative Examples 1 to 3 of this application.

### DESCRIPTION OF EMBODIMENTS

The following describes embodiments of this application with reference to accompanying drawings in embodiments of this application.

For a problem that a sodium-based transition metal oxide positive electrode material used for a sodium-ion battery has a low compaction density and poor kinetic performance, an embodiment of this application provides a sodium-ion battery positive electrode material.

Specifically, an embodiment of this application provides a sodium-ion battery positive electrode material, where the sodium-ion battery positive electrode material includes a sodium-based metal oxide, an XRD (X-Ray Diffraction, X-ray diffraction) spectrum of the sodium-ion battery positive electrode material includes diffraction peaks of at least the following 12 crystal planes: (003), (006), (101), (012), (104), (107), (018), (110), (113), (1010), (116), and (024), and a ratio of a peak area of the diffraction peak of the crystal plane (003) to a sum of peak areas of the diffraction peaks of the 12 crystal planes is less than 25%.

The crystal plane (003) is an inactive plane of the flat plate-like sodium-based metal oxide. This crystal plane is perpendicular to a thickness direction of the flat plate-like sodium-based metal oxide, and the crystal plane (003) is also a surface with a largest exposed area of the sodium-based metal oxide. In this application, the ratio of the peak area S₍₀₀₃₎ of the diffraction peak of the crystal plane (003) in the XRD spectrum of the sodium-ion battery positive electrode material including the sodium-based metal oxide to the sum (denoted as Sₐ) of the peak areas of the diffraction peaks of the foregoing 12 common crystal planes is controlled to be less than 25%. This can reflect that the crystal plane (003) of a crystal structure of the positive electrode material has low orientation, the flat plate-like structure is suppressed, and the sodium-ion battery positive electrode material is more likely rounded particles with a high sphericity. In this way, an exposure degree of electrochemically active planes of the material is increased, so that kinetic performance of the sodium-ion battery positive electrode material can be significantly improved, thereby facilitating improvement of rate performance of a sodium-ion battery. In addition, rounded particles with a high sphericity exhibit a regular morphology, and are prone to dense packing. Therefore, space utilization can be increased during roll pressing, and a compaction density of the material can be increased, thereby increasing an energy density of the sodium-ion battery. In addition, uniformity of sodium ion (Na+) deintercalation of particles with a rounded structure is also improved to some extent compared with that of a plate-like structure. This avoids formation of a region with excessive local Na⁺ deintercalation in the material and consequently severe damage to the material structure, thereby improving cycling performance of the sodium-ion battery to some extent.

Therefore, the sodium-ion battery positive electrode material that meets the foregoing XRD spectrum requirements can achieve good kinetic performance, a high compaction density, and a capability of uniform Na⁺ deintercalation, so that a sodium-ion battery using the sodium-ion battery positive electrode material can achieve good rate performance, a high energy density, and good cycling performance.

In the XRD spectrum of the material, a horizontal coordinate is a 2θ angle in a unit of "°", and a vertical coordinate is relative intensity of a diffraction peak. In the XRD spectrum of the sodium-ion battery positive electrode material, accurately, in a diffraction angle 2θ range of 10° to 90°, the diffraction peaks of the following 12 crystal planes are present: (003), (006), (101), (012), (104), (107), (018), (110), (113), (1010), (116), and (024). The diffraction peaks of the 12 crystal planes are common diffraction peaks of layered sodium-based metal oxides.

A diffraction angle 2θ of the diffraction peak of the crystal plane (003) is about 16.60°, a diffraction angle 2θ of the diffraction peak of the crystal plane (006) is about 33.57°, a diffraction angle 2θ of the diffraction peak of the crystal plane (101) is about 35.19°, a diffraction angle 2θ of the diffraction peak of the crystal plane (012) is about 36.50°, a diffraction angle 2θ of the diffraction peak of the crystal plane (104) is about 41.60°, a diffraction angle 2θ of the diffraction peak of the crystal plane (107) is about 53.48°, a diffraction angle 20 of the diffraction peak of the crystal plane (018) is about 58.59°, a diffraction angle 2θ of the diffraction peak of the crystal plane (110) is about 62.24°, a diffraction angle 20 of the diffraction peak of the crystal plane (113) is about 64.91°, a diffraction angle 2θ of the diffraction peak of the crystal plane (1010) is about 68.97°, a diffraction angle 20 of the diffraction peak of the crystal plane (116) is about 72.59°, and a diffraction angle 2θ of the diffraction peak of the crystal plane (024) is about 77.66°.

It should be noted that, according to differences in X-ray diffractometer models or in states of samples to be tested, the diffraction angles of the diffraction peaks of the foregoing crystal planes may have a detection error allowable in the art. The detection error should also fall within the protection scope of this application. Therefore, in some implementations of this application, the XRD spectrum of the sodium-ion battery positive electrode material exhibits diffraction peaks at diffraction angles 2θ of 16.1° to 17.1°, 33.07° to 34.07°, 34.69° to 35.69°, 36.05° to 37.05°, 41.10° to 42.10°, 53° to 54°, 58.09° to 59.09°, 61.74° to 62.74°, 64.41° to 65.41°, 68.47° to 69.47°, 72.09° to 73.09°, and 77.16° to 78.16°, and the positions of these peaks are respectively corresponding to the diffraction peaks of the following crystal planes: (003), (006), (101), (012), (104), (107), (018), (110), (113), (1010), (116), and (024).

In addition, it should be noted that, although the diffraction peaks of the foregoing 12 crystal planes are present in the XRD spectrum of the sodium-ion battery positive electrode material described in this application, inexistence of diffraction peaks of other crystal planes within a 2θ range of 10° to 90° is not excluded, particularly some diffraction peaks having low intensities. For example, in some implementations, the XRD spectrum of the sodium-ion battery positive electrode material further exhibits a diffraction peak of a crystal plane (015). A 2θ value corresponding to the diffraction peak of the crystal plane (015) is between the 20 value corresponding to the diffraction peak of the crystal plane (107) and the 20 value corresponding to the diffraction peak of the crystal plane (104).

In some implementations of this application, the ratio of the peak area S₍₀₀₃₎ of the diffraction peak of the crystal plane (003) to the sum Sₐ of the peak areas of the diffraction peaks of the 12 crystal planes may be less than or equal to 24%, or less than or equal to 23%, or less than or equal to 22%, or less than or equal to 21.5%, or the like. In some embodiments, the ratio is less than or equal to 23%, and is further less than or equal to 22%. In this case, the sodium-ion battery positive electrode material exhibits a more rounded apparent morphology and better kinetic performance.

In an implementation of this application, in the XRD spectrum of the sodium-ion battery positive electrode material, a ratio of the peak area S₍₀₀₃₎ of the diffraction peak of the crystal plane (003) to a sum of the peak area S₍₀₁₂₎ of the diffraction peak of the crystal plane (012) and the peak area S₍₁₁₀₎ of the diffraction peak of the crystal plane (110) meets the following: S₍₀₀₃₎/[S₍₀₁₂₎ + S₍₁₁₀₎] < 1.6. (012) and (110) are characteristic highly active crystal planes of the sodium-based metal oxide. Controlling the ratio of S₍₀₀₃₎ to the sum of the diffraction peak areas of (012) and (110) within the foregoing range can reflect that a ratio of a diffraction peak area of an inactive crystal plane to a diffraction peak area of an active crystal plane of the material is within a proper range, which is conducive to ensuring that the inactive crystal plane (003) of the material exhibits low preferred orientation. As a result, the material has a rounded structure rather than a plate-like structure having a lateral dimension far greater than its thickness, thereby facilitating sodium ion deintercalation and providing good electrochemical performance. Specifically, S₍₀₀₃₎/[S₍₀₁₂₎ + S₍₁₁₀₎] ≤ 1.5, or ≤ 1.4, or ≤ 1.3. In some implementations, S₍₀₀₃₎/[S₍₀₁₂₎ + S₍₁₁₀₎] is within a range of [1.0, 1.5], and may further be within a range of [1.1, 1.4]. In this case, the sodium-ion battery positive electrode material exhibits not only a high sphericity and good kinetic performance, but also good air stability and processability and superior cycling performance.

In an implementation of this application, in the XRD spectrum of the sodium-ion battery positive electrode material, a ratio of the peak area S₍₀₀₃₎ of the diffraction peak of the crystal plane (003) to the peak area S₍₁₀₄₎ of the diffraction peak of the crystal plane (104) is less than 0.9. In this way, it is conducive to ensuring that the crystal plane (003) of the sodium-ion battery positive electrode material has low preferred orientation. In some implementations, S₍₀₀₃₎/S₍₁₀₄₎ is less than or equal to 0.8, less than or equal to 0.75, less than or equal to 0.7, or the like. In some manners, S₍₀₀₃₎/S₍₁₀₄₎ is greater than or equal to 0.5, and may further be greater than or equal to 0.6 or the like. In some embodiments, 0.6 ≤ S₍₀₀₃₎/S₍₁₀₄₎ ≤ 0.7. In this way, the sodium-ion battery positive electrode material exhibits not only a high sphericity and good electrochemical performance, but also good air stability and processability of the material.

It should be noted that, when the sodium-ion battery positive electrode material 100 includes only the sodium-based metal oxide, XRD spectrum characteristics of the sodium-ion battery positive electrode material are XRD spectrum characteristics of the sodium-based metal oxide.

In this application, the sodium-based metal oxide is an oxide containing a sodium element and a metal element. The metal element includes at least a transition metal element. In other words, the metal element is a transition metal element, or includes a transition metal element and a main-group metal element. It should be noted that although the sodium-based metal oxide includes the sodium element, a metal element, and an oxygen element, another element is not excluded. For example, in some cases, the oxide may further contain a non-metal element.

In an implementation of this application, a chemical formula of the sodium-based metal oxide may include NaₓMₐD_{b}O_{y}, where 0.5 ≤ x ≤ 1.2, 1.8 ≤ y ≤ 2.2, 0 < a ≤ 1, 0 ≤ b < 1, M is a metal element, M includes at least one transition metal element, and D is a non-metal element. The elements in the chemical formula meet a charge balance. For example, M includes one or more of V (vanadium), Fe (iron), Cr (chromium), Mn (manganese), Co (cobalt), Ni (nickel), Cu (copper), Ti (titanium), Zn (zinc), Zr (zirconium), Mo (molybdenum), Nb (niobium), Li (lithium), K (potassium), Al (aluminum), Mg (magnesium), Ca (calcium), Sr (strontium), Sn (tin), and Sb (antimony), but is not limited thereto. In some implementations, M includes at least one of V, Fe, Cr, Mn, Co, Ni, and Cu. D may include at least one of F (fluorine), B (boron), P (phosphorus), Si (silicon), C (carbon), and N (nitrogen), but is not limited thereto. A value of x may be 0.5, 0.6, 0.7, 0.8, 0.9, 1.0, 1.1, or the like. y may be 1.85, 1.9, 2.0, 2.1, 2.2, or the like. In some embodiments, the chemical formula of the sodium-based metal oxide includes NaₓMO_{y}. When M includes a plurality of metal elements, a sum of subscripts of the metal elements may be 1. The elements meet a charge balance.

In some implementations of this application, the sodium-ion battery positive electrode material may further include a coating layer coated on a surface of the sodium-based metal oxide. In this case, the sodium-ion battery positive electrode material may include a core and a coating layer coated on a surface of the core. The core includes the sodium-based metal oxide, and the coating layer may be coated on the entire surface of the core, or may be coated on only a part of the surface of the core. When the XRD characteristics of the sodium-based metal oxide meet the foregoing conditions, presence of the coating layer can further improve air stability and cycling stability of the entire sodium-ion battery positive electrode material. In an implementation of this application, a material of the coating layer may include one or more of an oxide, a fluoride, and a phosphate, but is not limited thereto. A thickness of the coating layer may be within a range of 1 nm to 100 nm.

In an implementation of this application, the sodium-ion battery positive electrode material is single-crystal or single-crystal-like particles. Compared with a sodium-ion battery positive electrode material with a polycrystalline structure, the sodium-ion battery positive electrode material with a single-crystal or single-crystal-like structure exhibits a high crystallinity, a more stable bulk phase structure, and more superior cycling performance.

In an implementation of this application, the sodium-ion battery positive electrode material is spherical or spherical-like particles. In other words, the sodium-ion battery positive electrode material may be spherical or spherical-like single-crystal/single-crystal-like particles. A spherical or spherical-like apparent morphology can enable the sodium-ion battery positive electrode material to exhibit a high compaction density and good kinetic performance.

In an implementation of this application, an average particle sphericity of the sodium-ion battery positive electrode material is greater than or equal to 0.85. The "average particle sphericity" is an average value of sphericities of a plurality of particles of the sodium-ion battery positive electrode material. For example, an area equivalent sphericity of a single particle (which is equal to a ratio of an area equivalent radius d₁ of the particle to a perimeter equivalent radius d₂ of the particle) may be obtained from a two-dimensional SEM photo containing a plurality of (for example, 50 or more) particles of the sodium-ion battery positive electrode material. Based on this, an average value of sphericities of the plurality of particles of the sodium-ion battery positive electrode material can be calculated. d₁ may be calculated based on a projected area S of a single particle, and d₂ may be calculated based on a perimeter L of a projected contour of the particle: S = πd₁²; and L = 2πd₂. For another example, a volume equivalent sphericity of a single particle of the sodium-ion battery positive electrode material (which is equal to a ratio of a volume equivalent radius d₃ of the particle to a surface area equivalent radius d₄ of the particle) may be obtained from a three-dimensional SEM photo containing a plurality of (for example, 50 or more) particles of the sodium-ion battery positive electrode material. Based on this, an average value of sphericities of the plurality of particles of the sodium-ion battery positive electrode material can be calculated. d₃ may be calculated based on a volume V of the particle, and d₄ may be calculated based on a surface area S' of the particle: V = 4πd₁³/3; and S' = πd₄². It may be understood that the average particle sphericity of the sodium-ion battery positive electrode material is less than or equal to 1.0. To be specific, the average particle sphericity of the sodium-ion battery positive electrode material is within the range of 0.85 to 1.0. A sphericity of a particle closer to 1 reflects that a morphology of the particle is closer to a standard spherical shape.

A high average particle sphericity may reflect that the sodium-ion battery positive electrode material in this application is rounded particles instead of having a flat plate-like structure, such that an exposure degree of electrochemically active planes of the sodium-ion battery positive electrode material is increased, and kinetic performance can be significantly improved, thereby helping improve rate performance of a sodium-ion battery. In addition, rounded particles of the sodium-ion battery positive electrode material are prone to dense packing, and the material has a high compaction density, thereby increasing an energy density of the sodium-ion battery. In addition, uniformity of sodium ion (Na⁺) deintercalation of particles with a rounded structure is also improved to some extent compared with that of a plate-like structure, thereby improving cycling performance of the sodium-ion battery. Specifically, the average particle sphericality is greater than or equal to 0.85, 0.86, 0.87, 0.88, 0.90, 0.92, 0.95, or the like.

In an implementation of this application, in the sodium-ion battery positive electrode material, a quantity proportion of particles with a particle sphericity less than 0.85 in the sodium-ion battery positive electrode material is less than 30%. Particles with a low sphericity in the sodium-ion battery positive electrode material account for a small quantity proportion of particles in the overall sodium-ion battery positive electrode material, thereby ensuring a high average particle sphericity, better kinetic performance, and a high compaction density for the material. In some implementations, the quantity proportion may be less than or equal to 25%, less than or equal to 20%, less than or equal to 15%, less than or equal to 10%, less than or equal to 8%, less than or equal to 6%, less than or equal to 5%, or the like.

In an implementation of this application, an aspect ratio of the particles with a particle sphericity less than 0.85 in the sodium-ion battery positive electrode material is within a range greater than 1 and less than 3. Even though particles with a relatively low sphericity are present, their aspect ratios remain low and are far lower than those of conventional flat plate-like materials. These particles exhibit a relatively rounded apparent morphology, and their kinetic performance is still relatively high. Such particles are present in the entire positive electrode material, and do not excessively affect the kinetic performance and compaction density of the positive electrode material. The "aspect ratio" refers to a ratio of a maximum lateral dimension of a particle to a thickness of the particle. The particles with a sphericity less than 0.85 have a maximum lateral dimension greater than a thickness. The "maximum lateral dimension" may specifically refer to a distance between two points having a largest dimension on a cross section perpendicular to a thickness direction. For example, when the cross section is a polygon, the maximum lateral dimension may be a diameter of a circumcircle of the polygon. The foregoing aspect ratio may be learned from a scanning electron microscope photo of the material. In some implementations, the particles with a particle sphericity less than 0.85 in the sodium-ion battery positive electrode material may have an aspect ratio less than or equal to 2.8, less than or equal to 2.5, less than or equal to 2.2, less than or equal to 2.0, less than or equal to 1.8, less than or equal to 1.5, less than or equal to 1.4, or the like.

In some implementations of this application, a particle sphericity of each particle in the sodium-ion battery positive electrode material is greater than or equal to 0.85.

In an implementation of this application, an average particle size of the sodium-ion battery positive electrode material is within a range of 2 µm to 20 µm. In other words, the foregoing single-crystal or single-crystal-like particles have an average particle size of 2 µm to 20 µm. The average particle size of the sodium-ion battery positive electrode material having a single-crystal or single-crystal-like structure is controlled within the foregoing range. This not only can avoid lengthening of a sodium-ion diffusion path and deterioration of rate performance of the material that are caused by an excessively large average particle size of the positive electrode material, but also can avoid a low compaction density of the material caused by an excessively small average particle size of the positive electrode material. Specifically, the average particle size may be specifically 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or the like. The average particle size may be learned from a scanning electron microscope photo of the sodium-ion battery positive electrode material.

In an implementation of this application, a compaction density of the sodium-ion battery positive electrode material at 200 MPa is 3.1 g/mL or above, for example, in a range of 3.2 g/mL to 4.0 g/mL. Based on control of the XRD characteristic of the sodium-based transition metal oxide and the like in embodiments of this application, the sodium-ion battery positive electrode material can be enabled to exhibit a high sphericity and correspondingly a high compaction density, thereby increasing active substance loading of a negative electrode plate of a battery and improving an energy density of the battery. Specifically, the compaction density of the sodium-ion battery positive electrode material at 200 MPa may be 3.1 g/mL, 3.15 g/mL, 3.2 g/mL, 3.25 g/mL, 3.3 g/mL, 3.35 g/mL, 3.4 g/mL, 3.45 g/mL, or the like. The compaction density may be a compaction density read from a powder compaction density tester when the device is used to test a powder-like sodium-ion battery positive electrode material at a pressure of 200 MPa. In addition, it should be noted that, when the sodium-ion battery positive electrode material has or does not have a coating layer, its compaction density can meet the foregoing requirements.

An embodiment of this application further provides a sodium-ion battery positive electrode material. The sodium-ion battery positive electrode material includes a sodium-based metal oxide, and an average particle sphericity of the sodium-ion battery positive electrode material is greater than or equal to 0.85. For a definition of the "average particle sphericity", refer to the foregoing descriptions of this application. Details are not described herein again.

In this application, a high average particle sphericity of the sodium-ion battery positive electrode material may reflect that particles of the material have a rounded structure instead of a flat plate-like structure, such that an exposure degree of electrochemically active planes of the material is increased, and kinetic performance can be significantly improved, thereby helping improve rate performance of a sodium-ion battery. In addition, rounded particles of the sodium-ion battery positive electrode material are prone to dense packing, and the material has a high compaction density, thereby increasing an energy density of the sodium-ion battery. In addition, uniformity of sodium ion (Na⁺) deintercalation of particles with a rounded structure is also improved to some extent compared with that of a plate-like structure, thereby improving cycling performance of the sodium-ion battery. Specifically, the average particle sphericality is greater than or equal to 0.85, 0.86, 0.87, 0.88, 0.90, 0.92, 0.95, or the like.

In an implementation of this application, in an XRD spectrum of the sodium-ion battery positive electrode material, diffraction peaks of at least the following 12 crystal planes are present: (003), (006), (101), (012), (104), (107), (018), (110), (113), (1010), (116), and (024). Further, a ratio of a peak area S₍₀₀₃₎ of the diffraction peak of the crystal plane (003) to a sum of peak areas of the diffraction peaks of the 12 crystal planes is less than 25%. The peak area of the diffraction peak of the crystal plane (003) accounts for a small proportion. This can also reflect that the crystal plane (003) in a crystal structure of the sodium-ion battery positive electrode material has low orientation, a flat plate-like structure is suppressed, and the material is more likely rounded particles with a high sphericity. Therefore, the material exhibits good rate performance and a high compaction density.

The foregoing descriptions of related structural features, XRD spectrum characteristics, performance, and the like of the sodium-ion battery positive electrode material in this application are all applicable to the sodium-ion battery positive electrode material herein. Details are not described herein again.

An embodiment of this application further provides a sodium-ion battery positive electrode material precursor. The sodium-ion battery positive electrode material precursor may be configured to be mixed with a sodium source and then calcined to obtain the foregoing sodium-ion battery positive electrode material in embodiments of this application. The sodium-ion battery positive electrode material precursor includes a sodium-based metal oxide precursor, where an internal porosity of the sodium-ion battery positive electrode material precursor is greater than or equal to 10%, and/or a specific surface area of the sodium-ion battery positive electrode material precursor is greater than or equal to 25 m²/g.

The internal porosity of the precursor material may be learned from a cross-sectional SEM photo of the precursor material. Specifically, the internal porosity refers to a ratio of an area of pore portions (generally, pores appear as dark portions, and the material appears as bright portions) to an entire cross-sectional area in the cross-sectional SEM photo. The specific surface area of the precursor material may be measured by using a nitrogen adsorption method (also referred to as a "BET method"), and the precursor used for testing may be a solid powder.

Different from a conventional sodium-ion battery positive electrode material precursor, which is of a compact structure with a small specific area, the sodium-ion battery positive electrode material precursor in this application has a large internal porosity and/or a large specific surface area, and a loose internal structure. During calcination of the precursor and the sodium source, the molten sodium source can more readily penetrate into an interior of the precursor, thereby implementing uniform and rapid sodiation. An exterior of the precursor material is not exposed to a molten sodium salt environment for a long time, thereby avoiding formation of excessive flat crystal planes (003) during phase formation. In this way, a crystallization and phase formation time of the precursor material and the sodium source is shortened, an exposure degree of the flat crystal planes (003) in a formed positive electrode material is reduced, and a probability of forming a flat plate-like structure is suppressed. Therefore, a morphology of the obtained positive electrode material exhibits a rounded spherical or spherical-like structure, and a peak area of a diffraction peak of the crystal plane (003) in an XRD spectrum of the positive electrode material accounts for a small proportion, which may be less than 25%.

In an implementation of this application, the sodium-ion battery positive electrode material precursor is secondary particles. In other words, the sodium-ion battery positive electrode material precursor is polycrystalline particles, which are formed by aggregating a plurality of primary particles. Generally, the sodium-ion battery positive electrode material precursor is spherical or spherical particles. In an implementation of this application, a particle size of the secondary particles is within a range of 1 µm to 20 µm. When the sodium-ion battery positive electrode material precursor has a particle size within a proper range, it is conducive to ensuring that a positive electrode material formed after calcination with a sodium source has a proper particle size, thereby achieving a high compaction density, good rate performance, and the like. For example, the particle size of the secondary particles may be specifically 2 µm, 3 µm, 4 µm, 5 µm, 6 µm, 8 µm, 9 µm, 10 µm, 11 µm, 12 µm, 13 µm, 14 µm, 15 µm, 16 µm, 17 µm, 18 µm, 19 µm, or the like. In some implementations, the particle size of the secondary particles may be within a range of 3 µm to 15 µm, and may further be within a range of 5 µm to 10 µm.

The sodium-based metal oxide precursor is configured to be calcined with the sodium source to form a sodium-based metal oxide. It may be understood that the sodium-based metal oxide precursor does not contain a sodium element, and can be thermally decomposed into a sodium-free metal oxide. In an implementation of this application, the sodium-based metal oxide precursor includes a hydroxide, a carbonate, an oxyhydroxide, or the like corresponding to the sodium-free metal oxide. In some implementations, the sodium-based metal oxide precursor is a hydroxide, and a chemical formula of the hydroxide may be expressed as MₐD_{b}(OH)₂. In some other implementations, the sodium-based metal oxide precursor is a carbonate, and a chemical formula of the carbonate may be expressed as MₐD_{b}CO₃. In still some other implementations, the sodium-based metal oxide precursor is an oxyhydroxide, and an example chemical formula of the oxyhydroxide may be expressed as MₐD_{b}O(OH).

The sodium-ion battery positive electrode material precursor may be obtained by mixing raw materials used for forming the precursor and subjecting the mixture to a coprecipitation reaction. A precursor that meets the foregoing requirements of this application may be prepared by controlling technical parameters in a process of preparing the sodium-ion battery positive electrode material precursor.

For example, the positive electrode material precursor is a hydroxide. A preparation method of the hydroxide may include: preparing a metal salt solution used for forming the precursor, mixing the metal salt solution with a precipitant (specifically, an alkali, for example, sodium hydroxide) and a complexing agent (for example, aqueous ammonia, ethylenediaminetetraacetic acid disodium, or the like), and obtaining the precursor, that is, a metal-containing hydroxide, through a coprecipitation reaction. Precursors with different particle sizes and different pore structures may be obtained by adjusting parameters that affect coprecipitation growth of the positive electrode material precursor, such as a reaction temperature, a reaction time, reaction pH, a stirring speed, and addition rates of raw materials. In addition, growth (or "the coprecipitation reaction") of the precursor may be performed in one step or preferentially a plurality of steps, so as to better control an internal pore structure of the precursor. In some embodiments of this application, the precipitant and the precipitant may be added to the metal salt solution. After precursor particles with a specific target particle size are grown through the coprecipitation reaction, at least one of the reaction temperature, the reaction pH, the stirring speed, and the like is adjusted to change a coprecipitation reaction condition, so that the precursor particles continue to grow. This is more conducive to preparing a positive electrode material precursor with a loose structure, a high internal porosity, and a large specific surface area. The coprecipitation reaction condition may be changed for one or more times, and may be changed each time the precursor particles reach the target particle size.

An embodiment of this application further provides a preparation method of the foregoing sodium-ion battery positive electrode material. The preparation method includes the following steps:
mixing the foregoing sodium-ion battery positive electrode material precursor in embodiments of this application with a sodium source, followed by calcination to obtain the sodium-ion battery positive electrode material.

The sodium-ion battery positive electrode material in embodiments of this application is prepared by mixing the specific sodium-ion battery positive electrode material precursor provided in embodiments of this application with the sodium source, followed by sintering. The prepared positive electrode material has a rounded structure with a high sphericity, a high compaction density, and good Na⁺ deintercalation kinetic performance.

In this application, the sodium source is configured to provide sodium ions that form a positive electrode material of a sodium-ion battery system. The sodium source may be a sodium salt, for example, specifically one or more of sodium hydroxide, sodium carbonate, and sodium bicarbonate. The sodium-ion battery positive electrode material precursor meets the foregoing requirements of this application. For example, the sodium-ion battery positive electrode material precursor has an internal porosity greater than or equal to 10% and/or a specific surface area greater than or equal to 25 m²/g, so that the sodium-ion battery positive electrode material precursor and the sodium source are calcined to form a positive electrode material with a rounded structure.

In an implementation of this application, a temperature of the calcination may be 850°C to 1200°C, for example, specifically 860°C, 880°C, 900°C, 920°C, 950°C, 980°C, 990°C, 1000°C, 1100°C, or 1150°C. In an implementation of this application, a time of the calcination may be 6 to 30 hours, for example, specifically 8 hours, 10 hours, 12 hours, 15 hours, 16 hours, 18 hours, 20 hours, 24 hours, or 28 hours. An atmosphere of the calcination is an oxygen-containing atmosphere (for example, specifically an air atmosphere or an oxygen atmosphere), so that the precursor in the form of a hydroxide, a carbonate, or an oxyhydroxide is decomposed into an oxide. In addition, prior to the calcination, pre-calcination may be further performed to remove water, impurities, and the like from a mixed material containing the precursor and the sodium source. It may be understood that a temperature of the pre-calcination is lower than the temperature of the calcination.

In this application, the calcination may be performed in one stage or two or more stages. In some implementations of this application, the calcination is two-stage calcination: calcination at a first temperature for first duration, followed by cooling to a second temperature and calcination for second duration. It may be understood that the first temperature is higher than the second temperature. Both the first temperature and the second temperature are within the range of 850°C to 1200°C. The first duration may be shorter than the second duration. Short-time sintering at a high temperature can induce rapid nucleation and particle growth of the positive electrode material, while long-time sintering at a relatively lower second temperature can provide a shaping function, making a particle morphology of the positive electrode material more regular. The first temperature may be within a range of 900°C to 1200°C, and the second temperature may be within a range of 850°C to 1000°C. The first duration may be within a range of 2 hours to 10 hours, for example, specifically 4 h, 5 h, 6 h, or 8 h. The second duration may be within a range of 8 hours to 24 hours, for example, specifically 10 h, 12 h, 16 h, 18 h, or 20 h. In some embodiments, the mixed material containing the precursor and the sodium source is pre-calcined, then heated to a first calcination temperature of 950°C and sintered for 6 h, and subsequently cooled to a second calcination temperature of 900°C and sintered for 18 h.

In some implementations of this application, when the sodium-ion battery positive electrode material precursor is mixed with the sodium source, a doping element source may be further introduced, to mix the positive electrode material precursor with the sodium source and the doping element source, so that a sodium-ion battery positive electrode material containing a doping element is formed after calcination.

The preparation method of the sodium-ion battery positive electrode material provided in this embodiment of this application features a simple process and ease of operations, is applicable to large-scale production, and can be used to prepare a sodium-ion battery positive electrode material that meets the foregoing requirements of this application.

It should be noted that, after the mixed positive electrode material precursor and sodium source undergo the foregoing calcination, a sodium-based metal oxide that meets XRD spectrum features required in this application is mainly prepared. When the required sodium-ion battery positive electrode material further includes a coating layer, an operation of constructing the coating layer may be performed after the foregoing calcination step. The coating layer may be constructed by mixing the sodium-based metal oxide with a coating layer material or a raw material for synthesizing the coating layer material. A construction manner of the coating layer includes, but is not limited to, a solid-phase method or a liquid-phase method. For example, the solid-phase method may be a mechanical stirring method, a solid-phase high-energy ball milling method, a mechanical fusion method, or the like, and the liquid-phase method may be one or more of a sol-gel method, a coprecipitation coating method, a hydrothermal/solvothermal coating method, a liquid-phase high-energy ball milling method, a coating method, and a spray-drying coating method. Generally, when the liquid-phase method is used, after the mixing, heat treatment is further required to promote formation of the coating layer material, enhance a bonding force between the coating layer material and the sodium-based metal oxide, and the like.

An embodiment of this application further provides a positive electrode plate used for a sodium-ion battery. The positive electrode plate includes the sodium-ion battery positive electrode material described above in embodiments of this application.

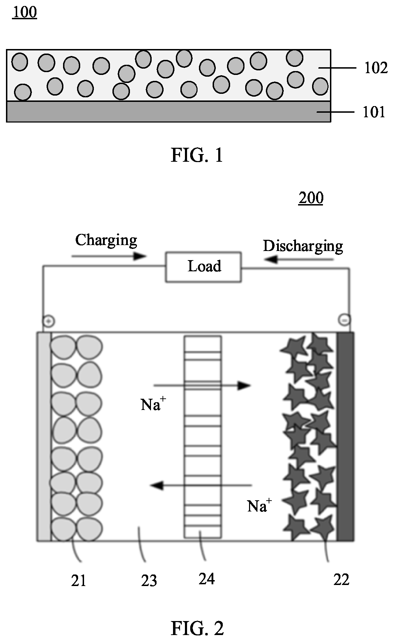

Referring to FIG. 1, a positive electrode plate 100 provided in this embodiment of this application includes a positive electrode current collector 101 and a positive electrode material layer 102 disposed on the positive electrode current collector 101. The positive electrode material layer 102 includes the sodium-ion battery positive electrode material described above in embodiments of this application. The sodium-ion battery positive electrode material is used as a positive electrode active material of the positive electrode plate 100. The positive electrode material layer 102 is disposed on a surface on one side of or surfaces on both sides of the positive electrode current collector 101. In an implementation of this application, the positive electrode material layer 102 may further include a binder, a conductive agent, and the like.

The positive electrode current collector 101, the binder, and the conductive agent are conventional selections in the field of sodium-ion batteries. For example, the positive electrode current collector may be aluminum foil, carbon-coated aluminum foil, an aluminum-plated polymer film, or the like. The binder may specifically include, but is not limited to, one or more of polytetrafluoroethylene (PTFE), polyvinylidene fluoride (PVDF), polyvinyl alcohol (PVA), polyimide (PI), polyacrylic acid (PAA), polyacrylate, polyacrylamide (PAM), carboxymethyl cellulose (CMC), styrene butadiene rubber (SBR), and sodium alginate. The conductive agent may specifically include, but is not limited to, one or more of acetylene black, Ketjen black, Super P conductive carbon black, graphite, graphene, carbon nanotubes, carbon fibers, and amorphous carbon. In some embodiments, the positive electrode material layer 102 may further include another positive electrode active material different from the sodium-ion battery positive electrode material.

FIG. 2 is a diagram of a structure of a sodium-ion battery according to an embodiment of this application. The sodium-ion battery 200 includes a positive electrode 21, a negative electrode 22, a liquid electrolyte 23, a separator 24, and a corresponding connecting auxiliary component and a corresponding circuit. The separator 24 is disposed between the positive electrode 21 and the negative electrode 22, and the positive electrode 21, the negative electrode 22, and the separator 24 are immersed in the liquid electrolyte 23. The positive electrode 21 includes the positive electrode plate 100 described above in embodiments of this application, and correspondingly includes the foregoing sodium-ion battery positive electrode material provided in embodiments of this application.

For the sodium-ion battery, energy is stored and released by sodium ions (Na⁺) deintercalation between the positive electrode 21 and the negative electrode 22. The liquid electrolyte 23 is a carrier for transporting Na⁺ between the positive electrode 21 and the negative electrode 22. The separator 24, which is ionically conductive but electronically insulating, is configured to separate the positive electrode 21 from the negative electrode 22 to prevent a short circuit. During charging of the sodium-ion battery 200, under action of an external circuit, Na⁺ is deintercalated from the positive electrode 21, and migrates to the negative electrode 22 through the liquid electrolyte 23 and the separator 24, thereby implementing electric energy storage. During discharging of the sodium-ion battery 200, Na⁺ is deintercalated from a negative electrode active material in the negative electrode 22, and migrates back to the positive electrode 21 through the liquid electrolyte 23 and the separator 24, thereby performing external work, to be specific, releasing electric energy to a power-consuming load connected to the sodium-ion battery 200.

The positive and negative electrode active materials are main parts for energy storage in the sodium-ion battery, and determine an energy density, cycling performance, and safety performance of the battery. After a negative electrode material system of the battery is determined, a capacity of the positive electrode active material is crucial to increasing the energy density of the entire battery. In this embodiment of this application, the positive electrode 21 of the sodium-ion battery 200 employs the foregoing sodium-ion battery positive electrode material provided in embodiments of this application, and the sodium-ion battery positive electrode material features good kinetic performance, a high compaction density, and uniform Na⁺ deintercalation. This enables the sodium-ion battery 200 to exhibit good rate performance, a high energy density, and good cycling performance.

The sodium-ion battery 200 shown in FIG. 2 is a liquid-state battery that uses a liquid electrolyte as a liquid-state electrolyte. It may be understood that, in another embodiment of this application, the sodium-ion battery may alternatively be a solid-state/semi-solid-state battery, and includes a positive electrode, a negative electrode, and a solid-state/semi-solid-state electrolyte layer located between the positive electrode and the negative electrode.

The sodium-ion battery provided in this embodiment of this application can be used as a battery for a consumer electronic device or a traction battery for a mobile apparatus such as an electric vehicle, or may be applied to an energy storage system, or the like. The consumer electronic device may include, but is not limited to, a mobile phone, a tablet computer, a notebook computer, and a wearable electronic device.

An embodiment of this application further provides a power-consuming device. The power-consuming device employs the foregoing sodium-ion battery to supply power to the power-consuming device. The power-consuming device may include an electronic device, a mobile apparatus (for example, an electric vehicle), or the like. The power-consuming device includes a power-consuming component and a power supply component, the power supply component supplies power to the power-consuming component, and the power supply component includes the sodium-ion battery described above in embodiments of this application.

In an implementation of this application, the electronic device may be an electronic product such as a mobile phone, a tablet computer, a notebook computer, a wearable device (such as a smartwatch, a smart band, or smart glasses), an augmented reality (Augmented Reality, AR) device, a virtual reality (Virtual Reality, VR) device, a television set, a digital camera, or an in-vehicle device. This application is not limited thereto.

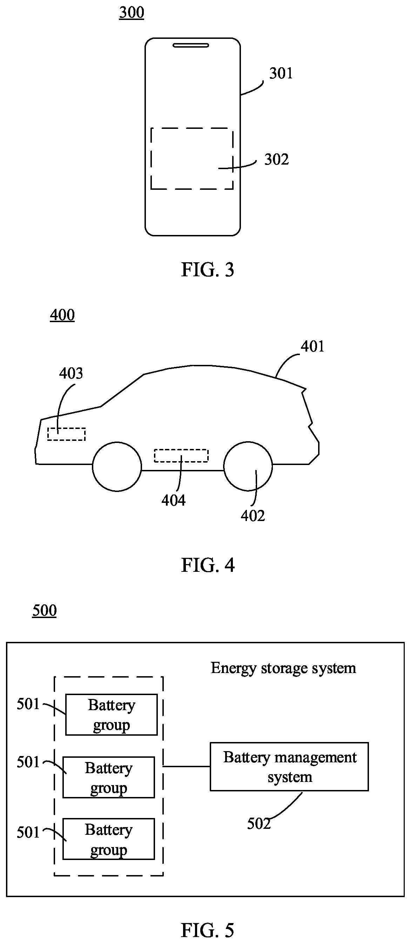

In some implementations, referring to FIG. 3, an embodiment of this application provides an electronic device 300. The electronic device 300 includes a housing 301, and a circuit board assembly (not shown in FIG. 3) and a battery 302 that are accommodated in the housing 301. The battery 302 may supply power to the electronic device 300, and the battery 302 includes the sodium-ion battery 200 described above in embodiments of this application. The battery 302 is electrically connected to a circuit board, and may supply power to the circuit board assembly. The circuit board assembly may be one of power-consuming components of the electronic device 300. In some embodiments, the housing 301 may include a front cover assembled on a front side of the electronic device and a rear cover assembled on a rear side, and the battery 302 may be fastened on an inner side of the rear cover. The electronic device 300 shown in FIG. 3 may be specifically a mobile phone or the like.

In some other implementations, referring to FIG. 4, an embodiment of this application provides a mobile apparatus 400. The mobile apparatus 400 may be various mobile apparatuses used for loading, transportation, assembly, disassembly, security, and the like, for example, vehicles in various forms, including but not limited to electric cars, electric buses, electric trucks, electric motorcycles, and electric bicycles. In this embodiment, description is provided by using an example in which the mobile apparatus 400 is specifically an electric vehicle.

Specifically, the mobile apparatus 400 may include a vehicle body 401, a mobile assembly 402 (for example, wheels), and a drive assembly. The drive assembly includes a motor 403 and a battery system 404. The battery system 404 includes the sodium-ion battery 200 provided in embodiments of this application. The battery system 404 is accommodated in the vehicle body 401 (for example, below a vehicle chassis) and is electrically connected to the motor 403. The battery system 404 may supply power to the motor 403, which in turn provides propulsion to drive the mobile assembly 402 to move. The motor 403 is one of power-consuming components of the mobile apparatus 400. The battery system 404 may be a battery pack, and the battery pack includes a plurality of the foregoing sodium-ion batteries 200. The plurality of sodium-ion batteries may be connected in series and/or in parallel to form a battery group. At least one battery module and a battery management system are packaged to form a battery pack.

An embodiment of this application further provides an energy storage system, including a plurality of the foregoing sodium-ion batteries 200 in embodiments of this application.

Referring to FIG. 5, an energy storage system 500 includes one or more battery groups 501 (in FIG. 5, two battery groups 501 are used as an example), and a battery management system 502 electrically connected to the battery groups 501. Each battery group 501 includes a plurality of the foregoing sodium-ion batteries 200 provided in embodiments of this application. The battery group 501 may be a module formed after a plurality of sodium-ion batteries 200 are connected in series and/or in parallel. The battery management system 502 may be configured to monitor status information of each sodium-ion battery 200 in the battery group 501, adjust a voltage and a temperature of the battery group, and implement functions such as charging and discharging protection. The battery group 501 and the battery management system 502 may be packaged to form a battery pack. The energy storage system 500 shown in FIG. 5 may be an electric vehicle energy storage system, a data center short-term power backup system, a site energy power backup system, a smart photovoltaic energy storage power station, or the like.

Embodiments of this application are further described below by using a plurality of examples.

### Example 1

A sodium-ion battery positive electrode material precursor is provided, which has a chemical formula of Ni_{1/3}Fe_{1/3}Mn_{1/3}(OH)₂, an internal porosity of 15.76%, and a specific surface area of 29.86 m²/g. The precursor was synthesized through the following steps:
(1-1) A nickel-iron-manganese metal salt solution was prepared: Nickel sulfate, ferrous sulfate, and manganese sulfate were dissolved in water according to a molar ratio of Ni:Fe:Mn of 1:1:1 to prepare a nickel-iron-manganese metal salt solution with a total metal ion concentration of 2 mol/L.
(1-2) An ammonia aqueous solution with a molar concentration of 7.0 mol/L and a sodium hydroxide aqueous solution with a concentration of 10.0 mol/L were prepared.
(1-3) Deionized water was added into a reaction kettle. The prepared ammonia aqueous solution and sodium hydroxide aqueous solution were then added into the reaction kettle. A temperature was adjusted to 60°C, and a pH value was adjusted to 11.6. A concentration of aqueous ammonia in the reaction kettle was 10 g/L. A stirring speed was 500 rpm. Under stirring conditions, the metal salt solution prepared in (1-1) was added to grow a precursor material through coprecipitation.
(1-4) After precursor particles grew to 2 µm in particle size, the temperature was maintained at 60°C, the pH value was changed to 10.0, the concentration of aqueous ammonia was changed to 7.5 g/L, and the stirring speed was changed to 450 rpm. Then, the ammonia aqueous solution and the sodium hydroxide aqueous solution prepared in (1-2) and the nickel-iron-manganese metal salt solution prepared in (1-1) were further slowly added.
(1-5) After the precursor particles grew to 4 µm to 5 µm in particle size, the prepared ammonia aqueous solution and sodium hydroxide aqueous solution were slowly added, the temperature was maintained at 60°C, the pH value was maintained at 10.0, the stirring speed was changed to 400 rpm, and aging and stirring were continuously performed for 12 h.
(1-6) After the aging was completed and a sample was obtained via full precipitation, a supernatant was removed. Then, the obtained precipitate sample was washed with a 1.0 mol/L sodium hydroxide solution at 50°C for 1 h, followed by five water washes, each for 1 h.
(1-7) The washed sample was dried in an oven at 120°C for about 24 h, and then was sieved through a 500-mesh sieve to obtain a precursor sample.

A sodium-ion battery positive electrode material is provided, which has a chemical formula of NaNi_{1/3}Fe_{1/3}Mn_{1/3}O₂. The sodium-ion battery positive electrode material was synthesized through the following steps:
(2-1) The prepared positive electrode material precursor Ni_{1/3}Fe_{1/3}Mn_{1/3}(OH)₂ was sufficiently mixed with sodium carbonate (Na₂CO₃) to obtain a mixture, where sodium carbonate was added according to a molar ratio of 1:1 between the transition metals (including Ni, Fe, and Mn) in the precursor and sodium in the sodium carbonate.
(2-2) The mixture in (2-1) was calcined in a muffle furnace: The calcination was carried out at 950°C for 6 h, and then a temperature was lowered to 900°C for further calcination for 18 h. A calcination atmosphere was a pure-oxygen atmosphere. After the calcination, the mixture was naturally cooled.
(2-3) A powder obtained after cooling in (2-2) was crushed, sieved, demagnetized, and vacuum packaged to obtain the sodium-ion battery positive electrode material NaNi_{1/3}Fe_{1/3}Mn_{1/3}O₂.

A positive electrode plate was prepared: The foregoing sodium-ion battery positive electrode material, a binder polyvinylidene fluoride (PVDF), and a conductive agent super P were added to N-methylpyrrolidone (NMP) according to a mass ratio of 94:3:3, followed by sufficient stirring and uniform mixing to obtain a slurry. The slurry was coated on an aluminum foil current collector, and then was dried, cold pressed, and slit to obtain the positive electrode plate.

A sodium-ion coin cell was prepared: The prepared positive electrode plate, sodium foil, a liquid electrolyte (the liquid electrolyte contains NaClO₄ with a concentration of 1 mol/L), and a separator were assembled into a 2032 coin cell.

### Example 2

A sodium-ion battery positive electrode material precursor is provided, which has a chemical formula of Ni_{0.32}Fe_{0.32}Mn_{0.32}Cu_{0.04}(OH)₂, an internal porosity of 16.99%, and a specific surface area of 30.52 m²/g. The precursor was synthesized through the following steps:
(1-1) A nickel-iron-manganese-copper metal salt solution was prepared: Nickel sulfate, ferrous sulfate, manganese sulfate, and copper sulfate were dissolved in water according to a molar ratio of Ni:Fe:Mn:Cu of 32:32:32:4 to prepare a nickel-iron-manganese-copper metal salt solution with a total metal ion concentration of 2 mol/L.
(1-2) An ethylenediaminetetraacetic acid disodium aqueous solution with a molar concentration of 0.3 mol/L and a sodium hydroxide aqueous solution with a concentration of 10.0 mol/L were prepared.
(1-3) Deionized water was added into a reaction kettle. The prepared ethylenediaminetetraacetic acid disodium solution and sodium hydroxide aqueous solution were then added into the reaction kettle. A temperature was adjusted to 50°C, and a pH value was adjusted to 11.5. A concentration of ethylenediaminetetraacetic acid disodium in the reaction kettle was 0.05 mol/L. A stirring speed was 500 rpm. Under stirring conditions, the metal salt solution prepared in (1-1) was added to grow precursor particles.
(1-4) After the precursor particles grew to 2 µm to 3 µm in size, the temperature was raised to 55°C, the pH value was changed to 10.5, the concentration of ethylenediaminetetraacetic acid disodium was maintained unchanged, the stirring speed was 450 rpm, and the ethylenediaminetetraacetic acid disodium solution and sodium hydroxide aqueous solution prepared in (1-2) and the nickel-iron-manganese-copper metal salt solution prepared in (1-1) were further slowly added.
(1-5) After the precursor particles grew to 5 µm to 6 µm in particle size, the prepared ethylenediaminetetraacetic acid disodium solution and sodium hydroxide aqueous solution were slowly added, the temperature was maintained at 55°C, the pH value was maintained at 10.5, the stirring speed was changed to 400 rpm, and aging and stirring were continuously performed for 12 h.
(1-6) After the aging was completed and a sample was obtained via full precipitation, a supernatant was removed. Then, the obtained precipitate sample was washed with a 1.0 mol/L sodium hydroxide solution at 50°C for 1 h, followed by five water washes, each for 1 h.
(1-7) The washed sample was dried in an oven at 120°C for about 24 h, and then the dried sample was sieved through a 500-mesh sieve to obtain a precursor sample.

A sodium-ion battery positive electrode material NaNi_{0.32}Fe_{0.32}Mn_{0.32}Cu_{0.04}O₂ was synthesized: According to the method described in Example 1, the prepared positive electrode material precursor Ni_{0.32}Fe_{0.32}Mn_{0.32}Cu_{0.04}(OH)₂ is mixed with sodium carbonate and then calcined to prepare the positive electrode material.

With reference to the method described in Example 1, the foregoing positive electrode material NaNi_{0.32}Fe_{0.32}Mn_{0.32}Cu_{0.04}O₂ was used to prepare a positive electrode plate and a sodium-ion battery.

### Example 3

A sodium-ion battery positive electrode material precursor is provided, which has a chemical formula of Ni_{1/3}Fe_{1/3}Mn_{1/3}CO₃, an internal porosity of 15.4%, and a specific surface area of 27.56 m²/g. The precursor was synthesized through the following steps:
(1-1) A nickel-iron-manganese metal salt solution was prepared: Nickel sulfate, ferrous sulfate, and manganese sulfate were dissolved in water according to a molar ratio of Ni:Fe:Mn of 1:1:1 to prepare a nickel-iron-manganese metal salt solution with a total metal ion concentration of 2 mol/L.
(1-2) An ammonium sulfate aqueous solution with a molar concentration of 0.3 mol/L (used as a complexing agent) and a sodium carbonate aqueous solution with a concentration of 2.0 mol/L (used as a precipitant) were prepared.
(1-3) Deionized water was added into a reaction kettle, and then the ammonium sulfate aqueous solution was added. A concentration of ammonium sulfate in the reaction kettle was maintained at 12 g/L. A pH value was adjusted to 8.0 by using aqueous ammonia. A temperature was adjusted to 60°C. A stirring speed was 700 rpm.
(1-4) The nickel-iron-manganese metal salt solution prepared in (1-1) and the ammonium sulfate aqueous solution and the sodium carbonate aqueous solution prepared in (1-2) were slowly added into the reaction kettle. The temperature was maintained at 60°C. The pH value was kept at 8.0. The stirring speed was 700 rpm.
(1-5) After precursor particles grew to 4 µm in particle size, the temperature was maintained at 60°C. The stirring speed was 450 rpm. Then, the ammonium sulfate aqueous solution and the sodium carbonate aqueous solution prepared in (1-2) and the nickel-iron-manganese metal salt solution prepared in (1-1) were further slowly added.
(1-6) After the precursor particles grew to 8 µm to 10 µm in particle size, feeding was stopped. The stirring speed was adjusted to 400 rpm, and aging and stirring were continuously performed for 12 h.
(1-7) After the aging was completed and a sample was obtained via full precipitation, a supernatant was removed. Then, the obtained precipitate sample was washed with a 0.5 mol/L sodium hydroxide solution at 50°C for 1 h, followed by five water washes, each for 1 h.
(1-8) The washed sample was dried in an oven at 120°C for about 24 h, and then the dried sample was sieved through a 400-mesh sieve to obtain a precursor sample.

A sodium-ion battery positive electrode material NaNi_{1/3}Fe_{1/3}Mn_{1/3}O₂ was synthesized: According to the method described in Example 1, the prepared positive electrode material precursor Ni_{1/3}Fe_{1/3}Mn_{1/3}CO₃ is mixed with sodium carbonate and then calcined to prepare the positive electrode material.

With reference to the method described in Example 1, the foregoing positive electrode material was used to prepare a positive electrode plate and a sodium-ion battery.

### Comparative Example 1

A sodium-ion battery positive electrode material precursor Ni_{1/3}Fe_{1/3}Mn_{1/3}(OH)₂ is provided, which has a specific surface area of 6.69 m²/g and an internal porosity of 2.39%. The precursor was synthesized through the following steps:
(1-1) A nickel-iron-manganese metal salt solution was prepared: Nickel sulfate, ferrous sulfate, and manganese sulfate were dissolved in water according to a molar ratio of Ni:Fe:Mn of 1:1:1 to prepare a nickel-iron-manganese metal salt solution with a total metal ion concentration of 2 mol/L.
(1-2) An ammonia aqueous solution with a molar concentration of 7.0 mol/L and a sodium hydroxide aqueous solution with a concentration of 10.0 mol/L were prepared.
(1-3) Deionized water was added into a reaction kettle. The prepared ammonia aqueous solution and sodium hydroxide aqueous solution were then added into the reaction kettle. A temperature was adjusted to 40°C, and a pH value was adjusted to 11.7. A concentration of aqueous ammonia in the reaction kettle was 9 g/L. A stirring speed was 500 rpm. Under stirring conditions, the metal salt solution prepared in (1-1) was added to grow precursor particles.
(1-4) After the precursor particles grew to 2 µm in particle size, the temperature was raised to 70°C, the pH value was changed to 10.4, the concentration of aqueous ammonia was changed to 8.2 g/L, and the stirring speed was changed to 450 rpm. Then, the ammonia aqueous solution and the sodium hydroxide aqueous solution prepared in (1-2) and the nickel-iron-manganese metal salt solution prepared in (1-1) were further slowly added.
(1-5) After the precursor particles grew to 4 µm to 5 µm in particle size, the prepared ammonia aqueous solution and sodium hydroxide aqueous solution were slowly added, the temperature was maintained at 70°C, the pH value was maintained at 10.4, the stirring speed was changed to 400 rpm, and aging and stirring were continuously performed for 12 h.
(1-6) After the aging was completed and a sample was obtained via full precipitation, a supernatant was removed. Then, the obtained precipitate sample was washed with a 1.0 mol/L sodium hydroxide solution at 50°C for 1 h, followed by five water washes, each for 1 h.
(1-7) The washed sample was dried in an oven at 120°C for duration of about 24 h, and then the dried sample was sieved through a 500-mesh sieve to obtain a precursor sample.

A sodium-ion battery positive electrode material NaNi_{1/3}Fe_{1/3}Mn_{1/3}O₂ was synthesized: According to the method described in Example 1, the positive electrode material precursor Ni_{1/3}Fe_{1/3}Mn_{1/3}(OH)₂ prepared in Comparative Example 1 is used to prepare a positive electrode material NaNi_{1/3}Fe_{1/3}Mn_{1/3}O₂.

With reference to the method described in Example 1, the positive electrode material NaNi_{1/3}Fe_{1/3}Mn_{1/3}O₂ in Comparative Example 1 is used to prepare a positive electrode plate and a sodium-ion battery.

### Comparative Example 2

A sodium-ion battery positive electrode material precursor Ni_{1/3}Fe_{1/3}Mn_{1/3}(OH)₂ is provided, which has a specific surface area of 14.62 m²/g and an internal porosity of 8.27%. The precursor was synthesized through the following steps:
(1-1) A nickel-iron-manganese metal salt solution was prepared: Nickel sulfate, ferrous sulfate, and manganese sulfate were dissolved in water according to a molar ratio of Ni:Fe:Mn of 1:1:1 to prepare a nickel-iron-manganese metal salt solution with a total metal ion concentration of 2 mol/L.
(1-2) An ammonia aqueous solution with a molar concentration of 7.0 mol/L and a sodium hydroxide aqueous solution with a concentration of 10.0 mol/L were prepared.
(1-3) Deionized water was added into a reaction kettle. The prepared ammonia aqueous solution and sodium hydroxide aqueous solution were then added into the reaction kettle. A temperature was adjusted to 40°C, and a pH value was adjusted to 11.6. A concentration of aqueous ammonia in the reaction kettle was 10 g/L. A stirring speed was 500 rpm. Under stirring conditions, the metal salt solution prepared in (1-1) was added to grow precursor particles.
(1-4) After the precursor particles grew to 2.5 µm in particle size, the temperature was raised to 62°C, the pH value was changed to 9.9, the concentration of aqueous ammonia was changed to 8.6 g/L, and the stirring speed was changed to 450 rpm. Then, the ammonia aqueous solution and the sodium hydroxide aqueous solution prepared in (1-2) and the nickel-iron-manganese metal salt solution prepared in (1-1) were further slowly added.
(1-5) After the precursor particles grew to 4 µm in particle size, the prepared ammonia aqueous solution and sodium hydroxide aqueous solution were slowly added, the temperature was maintained at 62°C, the pH value was maintained at 9.9, the stirring speed was changed to 400 rpm, and aging and stirring were continuously performed for 12 h.
(1-6) After the aging was completed and a sample was obtained via full precipitation, a supernatant was removed. Then, the obtained precipitate sample was washed with a 1.0 mol/L sodium hydroxide solution at 50°C for 1 h, followed by five water washes, each for 1 h.
(1-7) The washed sample was dried in an oven at 120°C for duration of about 24 h, and then the dried sample was sieved through a 500-mesh sieve to obtain a precursor sample.

A sodium-ion battery positive electrode material NaNi_{1/3}Fe_{1/3}Mn_{1/3}O₂ was synthesized: According to the method described in Example 1, the positive electrode material precursor Ni_{1/3}Fe_{1/3}Mn_{1/3}(OH)₂ prepared in Comparative Example 2 is used to prepare a positive electrode material NaNi_{1/3}Fe_{1/3}Mn_{1/3}O₂.

With reference to the method described in Example 1, the positive electrode material NaNi_{1/3}Fe_{1/3}Mn_{1/3}O₂ in Comparative Example 2 is used to prepare a positive electrode plate and a sodium-ion battery.

### Comparative Example 3

A sodium-ion battery positive electrode material precursor Ni_{0.32}Fe_{0.32}Mn_{0.32}Ca_{0.04}(OH)₂ is provided, which has a specific surface area of 17.18 m²/g and an internal porosity of 5.06%. The precursor was synthesized through the following steps:
(1-1) A nickel-iron-manganese-calcium metal salt solution was prepared: Nickel sulfate, ferrous sulfate, manganese sulfate, and calcium nitrate were dissolved in water according to a molar ratio of Ni:Fe:Mn:Ca of 32:32:32:4 to prepare a nickel-iron-manganese-calcium metal salt solution with a total metal ion concentration of 2 mol/L.
(1-2) An ammonia aqueous solution with a molar concentration of 7.0 mol/L and a sodium hydroxide aqueous solution with a concentration of 10.0 mol/L were prepared.
(1-3) Deionized water was added into a reaction kettle. The prepared ammonia aqueous solution and sodium hydroxide aqueous solution were then added into the reaction kettle. A temperature was adjusted to 40°C, and a pH value was adjusted to 11.7. A concentration of aqueous ammonia was 9.5 g/L. A stirring speed was 500 rpm. Under stirring conditions, the metal salt solution prepared in (1-1) was added to grow precursor particles.
(1-4) After the precursor particles grew to 2.5 µm in particle size, the temperature was maintained unchanged, the pH value was changed to 10.5, the concentration of aqueous ammonia was changed to 7.0 g/L, and the stirring speed was changed to 450 rpm. Then, the ammonia aqueous solution and the sodium hydroxide aqueous solution prepared in (1-2) and the nickel-iron-manganese-calcium metal salt solution prepared in (1-1) were further slowly added.
(1-5) After the precursor particles grew to 5 µm in particle size, the prepared ammonia aqueous solution and sodium hydroxide aqueous solution were slowly added, the temperature was maintained at 53°C, the pH value was changed to 10.0, the stirring speed was changed to 400 rpm, and aging and stirring were continuously performed for 12 h.
(1-6) After the aging was completed and a sample was obtained via full precipitation, a supernatant was removed. Then, the obtained precipitate sample was washed with a 1.0 mol/L sodium hydroxide solution at 50°C for 1 h, followed by five water washes, each for 1 h.
(1-7) The washed sample was dried in an oven at 120°C for duration of about 24 h, and then the dried sample was sieved through a 500-mesh sieve to obtain a precursor sample.

A sodium-ion battery positive electrode material NaNi_{0.32}Fe_{0.32}Mn_{0.32}Ca_{0.04}O₂ was synthesized: According to the method described in Example 1, the positive electrode material precursor NaNi_{0.32}Fe_{0.32}Mn_{0.32}Ca_{0.04}(OH)₂ prepared in Comparative Example 3 is used to prepare a positive electrode material.

With reference to the method described in Example 1, the foregoing positive electrode material NaNi_{0.32}Fe_{0.32}Mn_{0.32}Ca_{0.04}O₂ in Comparative Example 3 was used to prepare a positive electrode plate and a sodium-ion battery.

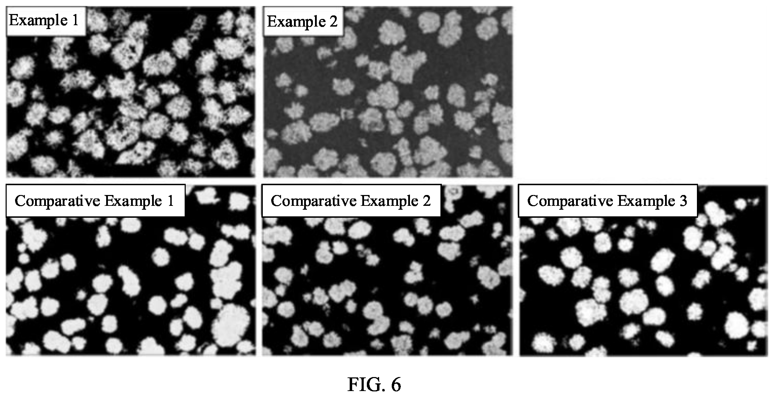

A cross-sectional SEM test was separately performed on the positive electrode material precursors prepared in Examples 1 and 2 and Comparative Examples 1 to 3. Obtained cross-sectional SEM photos are summarized in FIG. 6 (in the figure, dark portions are pores, and bright regions are material regions). An internal porosity of each positive electrode precursor was tested based on the cross-sectional SEM photos. Results are summarized in Table 1. In addition, a specific surface area of each positive electrode precursor powder was tested by using a nitrogen adsorption method. Related results are also summarized in Table 1 below.

**Table 1 Test results of the positive electrode material precursors**

| | Internal porosity (%) | Specific surface area (m²/g) |
|---|---|---|
| Example 1 | 15.76 | 29.86 |
| Example 2 | 16.99 | 29.60 |
| Comparative Example 1 | 2.39 | 14.62 |
| Comparative Example 2 | 8.27 | 22.76 |
| Comparative Example 3 | 5.06 | 17.18 |

It can be seen from Table 1 that the internal porosities and specific surface areas of the positive electrode material precursors in Examples 1 and 2 are both significantly higher than those in Comparative Examples 1 to 3. Characteristics of the high internal porosities and the high specific surface areas of the precursors can enable the sodium salts to more easily penetrate into interiors of the precursors during sintering therewith, such that the obtained positive electrode materials exhibit more rounded morphology structures and better single-crystallization effects.

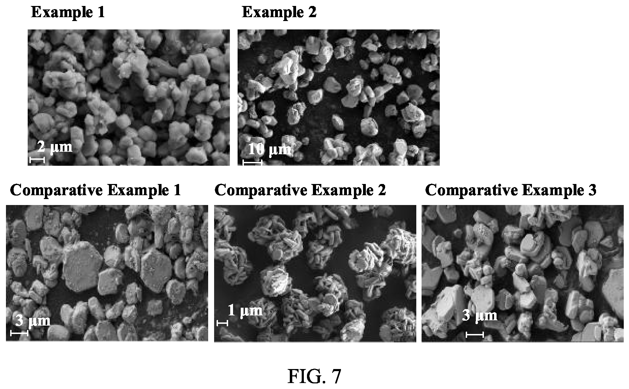

The positive electrode materials prepared in Examples 1 and 2 and Comparative Examples 1 to 3 were separately tested by using a scanning electron microscope. Obtained SEM photos are shown in FIG. 7. It can be seen from FIG. 7 that the positive electrode materials in Examples 1 and 2 exhibit obvious rounded and highly spherical single-crystal material characteristics, whereas the positive electrode materials in Comparative Examples 1 to 3 all exhibit obvious flat plate-like structures. The positive electrode materials in Comparative Examples 1 and 3 exhibit single-crystal or single-crystal-like structures, whereas the positive electrode material in Comparative Example 2 is particles with a polycrystalline structure. It can be further seen from FIG. 7 that, in this application, an average particle size D50 of the positive electrode material in Example 1 is 2 µm, D50 of the positive electrode materials in Example 2 and Comparative Examples 1 and 3 is 5 µm, and D50 of the positive electrode material in Comparative Example 2 is 3 µm.

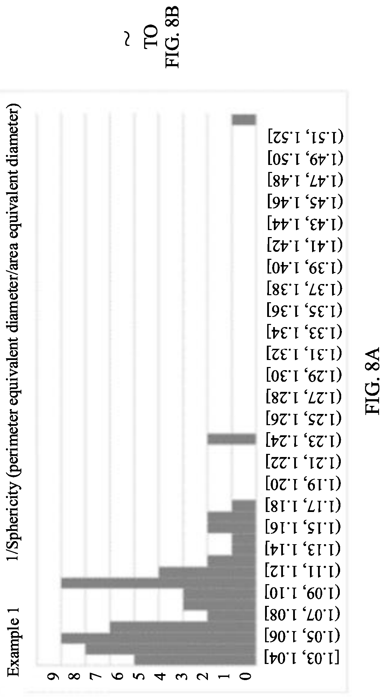

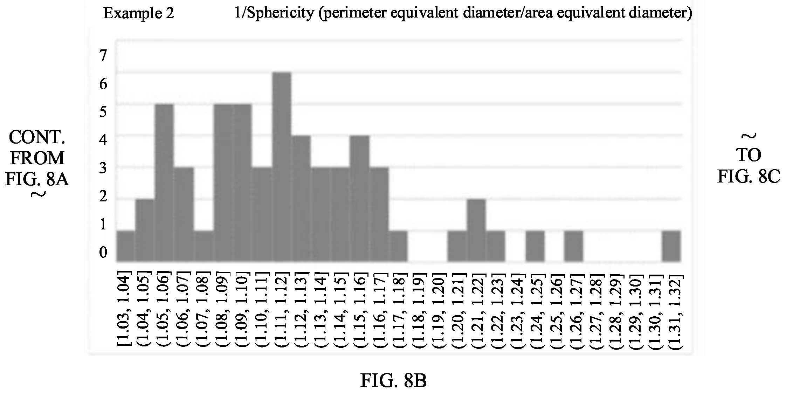

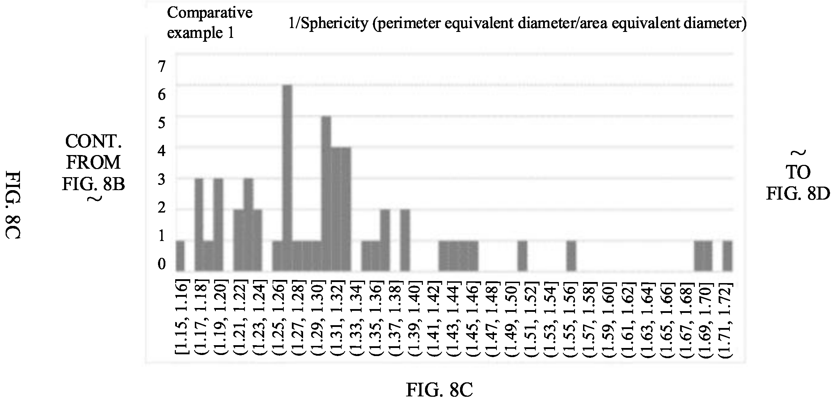

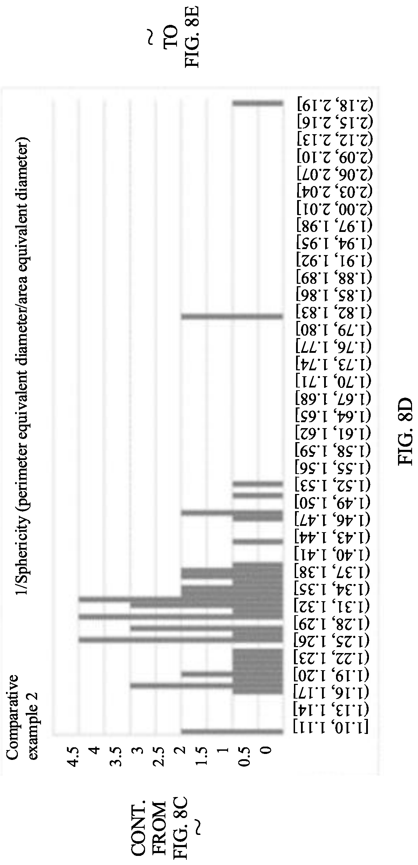

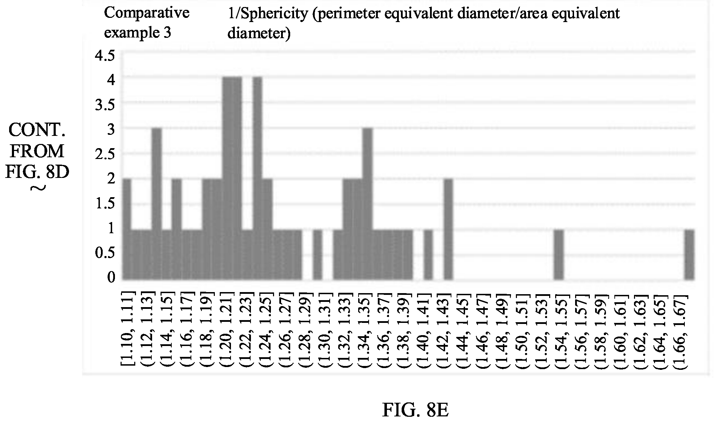

In the SEM photos of the positive electrode materials in Examples 1 and 2 and Comparative Examples 1 to 3, 50 or more particles of the positive electrode materials were separately selected, so as to calculate a sphericity of each particle. Obtained result distribution diagrams are shown in FIG. 8A to FIG. 8E. In FIG. 8A to FIG. 8E, a horizontal coordinate is a reciprocal of the sphericity of the particle, and a vertical coordinate is a quantity of particles. It can be seen from FIG. 8A to FIG. 8E that, average values of perimeter equivalent radius d₂/area equivalent radius d₁ of particles of the positive electrode materials in Examples 1 and 2 are respectively 1.10 and 1.13, and average values of d₂/d₁ of particles of the positive electrode materials in Comparative Examples 1 to 3 are respectively 1.31, 1.35, and 1.25. It can be learned from the foregoing definition of the average particle sphericity that, the average particle sphericities of the particles of the positive electrode materials in Examples 1 and 2 are respectively 0.9091 and 0.8849, which are both greater than 0.85, whereas the average particle sphericities of the particles of the positive electrode materials in Comparative Examples 1 to 3 are respectively 0.7633, 0.7407, and 0.8, which are significantly less than the average particle sphericities of the positive electrode materials in Examples 1 to 3. It can be learned that, in embodiments of this application, the particles of the positive electrode materials exhibit a rounded morphology.

In addition, it can be further seen from FIG. 8A to FIG. 8E that, among 58 particles of the sodium-ion battery positive electrode material that are selected in Example 1, a quantity proportion of particles with a sphericity less than 0.85 is only 5.2%; and among 56 particles of the sodium-ion battery positive electrode material that are selected in Example 2, a quantity proportion of particles with a sphericity less than 0.85 is about 13%. It can be learned that a quantity proportion of particles with a low sphericity of the sodium-ion battery positive electrode material is low, this is conducive to ensuring a high average particle sphericity of the positive electrode material, thereby facilitating improvement of kinetic performance and a compaction density of the material.

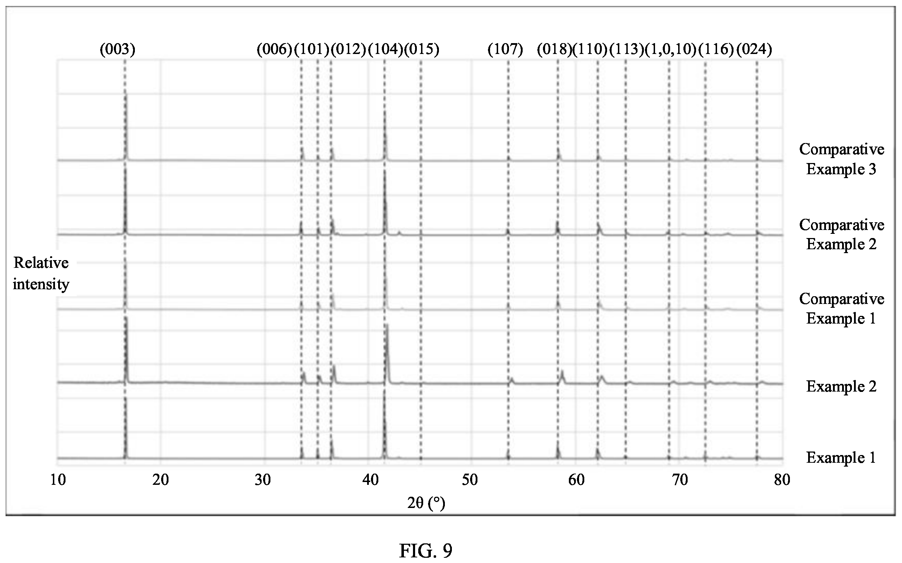

The positive electrode materials prepared in Examples 1 and 2 and Comparative Examples 1 to 3 were tested by using an XRD (X-ray Diffraction, X-ray diffraction) instrument. Obtained XRD spectra are shown in FIG. 9. It can be seen from FIG. 9 that the positive electrode materials prepared in Examples 1 and 2 and Comparative Examples 1 to 3 all exhibit characteristic diffraction peaks of the following 13 crystal planes: (003), (006), (101), (012), (104), (015), (107), (018), (110), (113), (1010), (116), and (024). If a sum of peak areas of the 13 diffraction peaks in each XRD spectrum is Sₐₗₗ, the peak area of the diffraction peak of the crystal plane (003) is denoted as S₍₀₀₃₎, and a sum of the areas of the diffraction peaks of 12 crystal planes other than (015) is denoted as Sₐ, then a ratio of the peak area of the diffraction peak of each crystal plane to Sₐₗₗ, a ratio of S₍₀₀₃₎ to Sₐ, and a ratio of S₍₀₀₃₎/[S₍₀₁₂₎ + S₍₁₁₀₎] are summarized in Table 2 below.

**Table 2 Summary of XRD spectrum information of the positive electrode materials**

| | | Example 1 | Example 2 | Comparative Example 1 | Comparative Example 2 | Comparative Example 3 |
|---|---|---|---|---|---|---|
| Proportion of a peak area of a diffraction peak of each crystal plane | (003) | 21.24% | 21.39% | 25.47% | 26.74% | 31.87% |
| | (006) | 4.52% | 5.34% | 5.91% | 5.82% | 5.80% |
| | (101) | 3.98% | 3.98% | 4.06% | 3.94% | 2.63% |
| | (012) | 8.61% | 8.74% | 8.22% | 8.14% | 6.32% |
| | (104) | 31.34% | 30.63% | 27.57% | 28.25% | 32.04% |
| | (015) | 0.86% | 0.56% | 0.78% | 0.64% | 0.59% |
| | (107) | 3.38% | 3.41% | 3.94% | 3.63% | 2.39% |
| | (018) | 7.73% | 8.34% | 8.05% | 7.42% | 5.83% |
| | (110) | 8.02% | 7.76% | 7.32% | 6.05% | 5.34% |
| | (113) | 2.37% | 2.11% | 2.19% | 2.17% | 1.76% |
| | (1010) | 2.13% | 2.34% | 2.12% | 2.46% | 1.74% |
| | (116) | 2.70% | 2.46% | 2.23% | 2.24% | 1.53% |
| | (024) | 3.12% | 2.94% | 2.14% | 2.50% | 2.16% |
| S₍₀₀₃₎/Sₐ | | 21.42% | 21.51% | 25.67% | 26.91% | 32.06% |
| S₍₀₀₃₎/[S₍₀₁₂₎ + S₍₁₁₀₎] | | 1.28 | 1.30 | 1.64 | 1.88 | 2.73 |

It can be seen from Table 1 that, in the XRD spectra of the positive electrode materials in Examples 1 and 2, values of S₍₀₀₃₎/Sₐ are respectively 21.42% and 21.51%, which are both less than 25%; and values of S₍₀₀₃₎/Sₐ of the positive electrode materials in Comparative Examples 1 to 3 are all greater than 25%. This can reflect that the positive electrode materials in the embodiments of this application are rounded particles with a high sphericity. In addition, S₍₀₀₃₎/[S₍₀₁₂₎+S₍₁₁₀₎] in the XRD spectra of the positive electrode materials in Examples 1 and 2 is less than that in Comparative Examples 1 to 3, and S₍₀₀₃₎/[S₍₀₁₂₎ + S₍₁₁₀₎] in the embodiments is less than 1.6. This can also reflect that the crystal plane (003) of the positive electrode material in embodiments of this application exhibits low orientation, and the positive electrode material is rounded particles with a high sphericity.

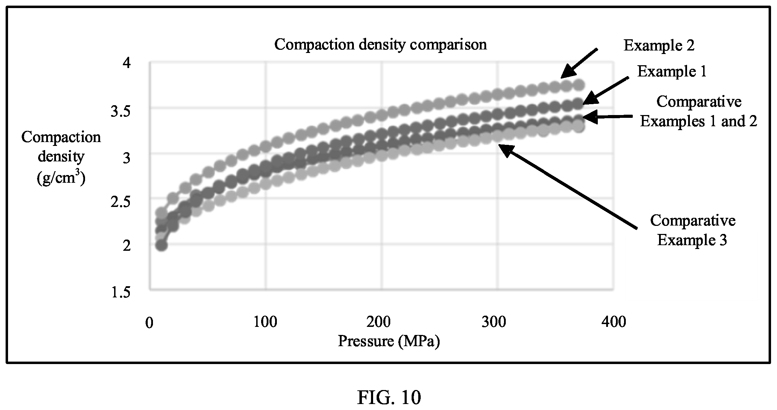

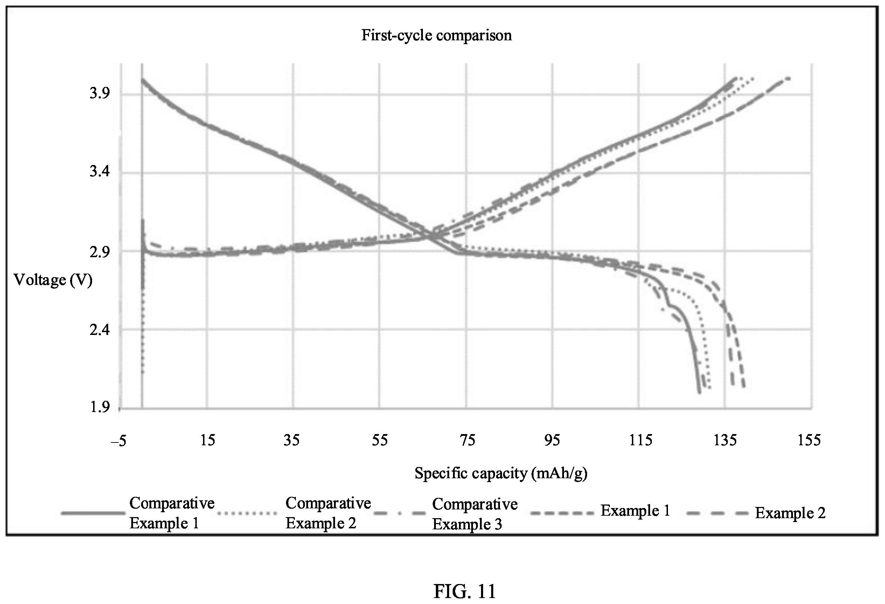

A compaction density test was separately performed on the positive electrode materials in Examples 1 and 2 and Comparative Examples 1 to 3 by using a powder compaction density tester. Results are shown in FIG. 10. Compaction density values of the powder materials at pressure of 200 MPa are summarized in Table 3. In addition, the positive electrode materials in Examples 1 and 2 and Comparative Examples 1 to 3 were separately assembled into sodium-ion coin cells, which were tested for charging and discharging. A voltage range of the charge-discharge tests was 2.0 V to 4.0 V, and a first-cycle charge-discharge rate was 0.1 C. First-cycle electrochemical curves are shown in FIG. 11. A charge specific capacity of each sodium-ion coin cell during initial charging and discharging, a median voltage during charging, and a battery energy density calculated therefrom are summarized in Table 3. The battery energy density is calculated as follows: Battery energy density = Compaction density of the positive electrode material × Initial-charge specific capacity × Median voltage.

**Table 3 Summary of compaction densities of the positive electrode materials and electrochemical performance of coin cells**

| | Compaction density (g/mL) | 0.1 C initial-charge specific capacity (mAh/g) | Medium charge voltage (V) | Energy density (Wh/L) | 0.1 C initial-discharge specific capacity (mAh/g) |
|---|---|---|---|---|---|
| Example 1 | 3.21 | 149.18 | 3.05 | 1460.55 | 138.91 |
| Example 2 | 3.42 | 149.13 | 3.02 | 1540.27 | 137.94 |
| Comparative Example 1 | 3.03 | 137.60 | 3.02 | 1259.12 | 124.53 |
| Comparative Example 2 | 3.09 | 141.81 | 3.05 | 1336.49 | 129.25 |
| Comparative Example 3 | 2.97 | 138.33 | 3.07 | 1261.28 | 126.15 |

It can be seen from Table 3 that the positive electrode material powders in Examples 1 and 2 have high compaction densities, which reach 3.21 g/mL and 3.42 g/mL, respectively. This may be related to the high sphericities and rounded structures of the positive electrode materials in embodiments of this application. However, because the positive electrode materials in Comparative Examples 1 to 3 have a flat structure, obvious voids are likely to be formed during compaction tests. Therefore, the compaction densities of the positive electrode material powders in the comparative examples are significantly lower, and none exceeds 3.10 g/mL. In addition, because the positive electrode materials in the embodiments of this application have high compaction densities, the calculated battery energy densities are also high, all being 1450 Wh/L or above. The battery energy densities are significantly higher than those of the coin cells in Comparative Examples 1 to 3, none of which exceeds 1350 Wh/L.

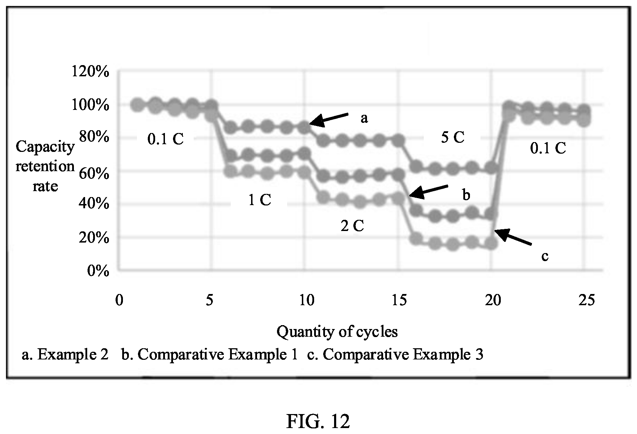

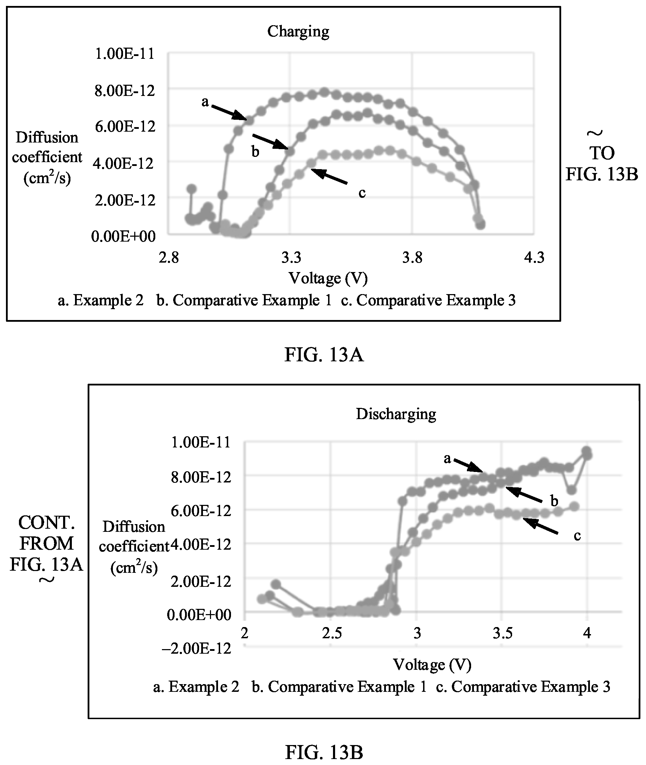

To verify that the sodium-ion battery positive electrode materials provided in the embodiments of this application have good kinetic performance, coin cells prepared from the positive electrode materials in Example 2 and Comparative Examples 1 and 3, which have similar particle sizes, were tested for rate performance and GITT (Galvanostatic Intermittent Titration Technique, galvanostatic intermittent titration technique) tests, so as to eliminate impact of differences in particle radius on results. Rate performance test results are shown in FIG. 12, and GITT test results are shown in FIG. 13A and FIG. 13B. It can be clearly seen from FIG. 12 that, at a high rate, a capacity retention rate of a coin cell prepared using the positive electrode material in Example 2 is significantly superior to those of Comparative Examples 1 and 3. In addition, it can be seen from FIG. 13A and FIG. 13B that a diffusion coefficient of the positive electrode material in Example 2 during charging and discharging is significantly higher than those in Comparative Examples 1 and 3. This is possibly mainly because an exposure degree of active crystal planes of rounded single-crystal particles with a high sphericity is increased, thereby significantly improving kinetic performance of the layered positive electrode material and further improving the rate performance of the cell.

The following explores a cycling performance improvement situation of the sodium-ion battery positive electrode material provided in embodiments of this application. First, the sodium-ion battery positive electrode material in each example or comparative example was prepared into a sodium-ion pouch cell. Specifically, preparation steps include: The sodium-ion battery positive electrode material, a binder polyvinylidene fluoride (PVDF), a conductive agent Super P, a conductive agent carbon nanotubes CNT, and oxalic acid were added into a solvent N-methylpyrrolidone (NMP) according to a mass ratio of 96:1:0.5:0.5, followed by sufficient stirring and uniform mixing to obtain a mixed slurry; and the mixed slurry was coated onto both sides of an aluminum foil current collector, followed by drying, cold pressing, and slitting to obtain a positive electrode plate. In addition, hard carbon was used as a negative electrode active material and uniformly stirred with binders CMC and SBR and the conductive agent Super P to prepare a negative electrode slurry. The negative electrode slurry was coated onto an aluminum foil current collector, followed by drying, cold pressing, and slitting to obtain a negative electrode plate. The positive electrode plate, a separator, and the negative electrode plate were stacked in a lamination manner to obtain a bare cell, which was then packaged with an aluminum-plastic film to obtain a pouch cell.

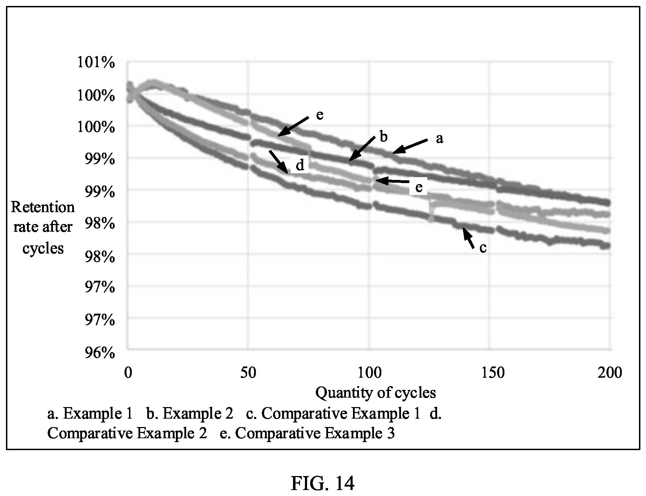

Then, the sodium-ion pouch cells assembled from the positive electrode materials in Examples 1 and 2 and Comparative Examples 1 to 3 were electrochemically tested. A voltage range of the electrochemical tests was 2.0 V to 3.95 V, and a cycling rate was 1 C. In addition, after every 50 cycles at 1 C, one charge-discharge cycle at 0.1 C was performed for capacity recovery. Cycling performance test results of the sodium-ion pouch cells are summarized in FIG. 14. It can be seen from FIG. 14 that cycling performance of the sodium-ion pouch cells in Examples 1 and 2 is superior to that of Comparative Examples 1 to 3. This may be because the positive electrode materials in Examples 1 and 2 exhibit a high particle sphericity, and uniformity of Na+ deintercalation of the positive electrode materials during battery cycling is improved, thereby avoiding formation of a region with excessive local Na+ deintercalation in the material. In contrast, the formation of the region with excessive Na+ deintercalation causes severe structural damage to the material, leading to deterioration in cycling performance. Therefore, in embodiments of this application, uniformity of Na+ intercalation/deintercalation in the positive electrode material is improved, thereby cycling stability of the positive electrode material.

The foregoing descriptions are merely example implementations of this application, and the descriptions thereof are specific and detailed, but cannot therefore be understood as a limitation on the scope of this application. It should be noted that a person of ordinary skill in the art may make some variants and improvements without departing from the concept of this application, and the variants and improvements shall fall within the protection scope of this application. Therefore, the protection scope of the patent in this application shall be subject to the appended claims.

In the descriptions of this application, unless otherwise specified, "a plurality of' means two or more. "At least one" means one or more. "At least one of the following items (pieces)" or a similar expression thereof means any combination of these items, including any combination of singular items (pieces) or plural items (pieces). For example, "at least one of a, b, or c", or "at least one of a, b, and c" may indicate: a, b, c, a-b (namely, a and b), a-c, b-c, or a-b-c, where a, b, and c may be singular or plural.

In addition, a value range indicated by "-" includes values preceding and following "-" as a minimum value and a maximum value, respectively. Expressions of a parameter range in this application, for example, "greater than or equal to (≥)", "less than or equal to (≤)", "above...", and "below...", all include a specified number. A value and a value range in embodiments of this application are approximate values. Due to impact of a manufacturing process/test method or the like, there may be an error within a specific range. A person skilled in the art may consider that the error is negligible.

## Claims

1. A sodium-ion battery positive electrode material, wherein the sodium-ion battery positive electrode material comprises a sodium-based metal oxide, an X-ray diffraction spectrum of the sodium-ion battery positive electrode material comprises diffraction peaks of the following 12 crystal planes: (003), (006), (101), (012), (104), (107), (018), (110), (113), (1010), (116), and (024), and a ratio of a peak area of the diffraction peak of the crystal plane (003) to a sum of peak areas of the diffraction peaks of the 12 crystal planes is less than 25%.

2. The sodium-ion battery positive electrode material according to claim 1, wherein the ratio of the peak area of the diffraction peak of the crystal plane (003) to the sum of the peak areas of the diffraction peaks of the 12 crystal planes is less than or equal to 23%.

3. The sodium-ion battery positive electrode material according to claim 1 or 2, wherein a ratio of the peak area of the diffraction peak of the crystal plane (003) to a sum of the peak areas of the diffraction peaks of the crystal plane (012) and the crystal plane (110) is less than 1.6.

4. The sodium-ion battery positive electrode material according to any one of claims 1 to 3, wherein the sodium-ion battery positive electrode material is single-crystal or single-crystal-like particles.

5. The sodium-ion battery positive electrode material according to any one of claims 1 to 4, wherein the sodium-ion battery positive electrode material is spherical or single-crystal-like-spherical particles.

6. The sodium-ion battery positive electrode material according to any one of claims 1 to 5, wherein an average particle sphericity of the sodium-ion battery positive electrode material is greater than or equal to 0.85.

7. The sodium-ion battery positive electrode material according to claim 6, wherein in the sodium-ion battery positive electrode material, a proportion of particles with a particle sphericity less than 0.85 is less than 30%.

8. The sodium-ion battery positive electrode material according to claim 7, wherein an aspect ratio of the particles with a particle sphericity less than 0.85 is within a range greater than 1 and less than 3.

9. The sodium-ion battery positive electrode material according to any one of claims 1 to 8, wherein an average particle size of the sodium-ion battery positive electrode material is within a range of 2 µm to 20 µm.

10. The sodium-ion battery positive electrode material according to any one of claims 1 to 9, wherein a chemical formula of the sodium-based metal oxide comprises NaₓMₐD_{b}O_{y}, wherein 0.5 ≤ x ≤ 1.2, 1.8 ≤ y ≤ 2.2, 0 < a ≤ 1, 0 ≤ b < 1, A is a metal element, A comprises at least one transition metal element, and D is a non-metal element.

11. The sodium-ion battery positive electrode material according to claim 10, wherein A comprises one or more of V, Fe, Cr, Mn, Co, Ni, Cu, Ti, Zn, Zr, Mo, Nb, Li, K, Al, Mg, Ca, Sr, Sn, and Sb, and D comprises at least one of F, B, P, Si, C, and N.

12. The sodium-ion battery positive electrode material according to any one of claims 1 to 11, wherein the sodium-ion battery positive electrode material further comprises a coating layer coated on a surface of the sodium-based metal oxide.

13. The sodium-ion battery positive electrode material according to any one of claims 1 to 12, wherein a compaction density of the sodium-ion battery positive electrode material at 200 MPa is 3.1 g/mL or above.

14. A sodium-ion battery positive electrode material, wherein the sodium-ion battery positive electrode material comprises a sodium-based metal oxide, and an average particle sphericity of the sodium-ion battery positive electrode material is greater than or equal to 0.85.

15. The sodium-ion battery positive electrode material according to claim 14, wherein an X-ray diffraction spectrum of the sodium-ion battery positive electrode material comprises diffraction peaks of the following 12 crystal planes: (003), (006), (101), (012), (104), (107), (018), (110), (113), (1010), (116), and (024), and a ratio of a peak area of the diffraction peak of the crystal plane (003) to a sum of peak areas of the diffraction peaks of the 12 crystal planes is less than 25%.

16. The sodium-ion battery positive electrode material according to claim 14 or 15, wherein the sodium-ion battery positive electrode material is single-crystal or single-crystal-like particles.

17. A sodium-ion battery positive electrode material precursor, wherein the sodium-ion battery positive electrode material precursor comprises a sodium-based metal oxide precursor, wherein an internal porosity of the sodium-ion battery positive electrode material precursor is greater than or equal to 10%, and/or a specific surface area of the sodium-ion battery positive electrode material precursor is greater than or equal to 25 m²/g.

18. The sodium-ion battery positive electrode material precursor according to claim 17, wherein the sodium-ion battery positive electrode material precursor is secondary particles, and a particle size of the secondary particles is within a range of 1 µm to 20 µm.

19. The sodium-ion battery positive electrode material precursor according to claim 17 or 18, wherein the sodium-based metal oxide precursor comprises a hydroxide, a carbonate, and/or an oxyhydroxide.

20. A preparation method of a sodium-ion battery positive electrode material, comprising the following steps:
mixing the sodium-ion battery positive electrode material precursor according to any one of claims 17 to 19 with a sodium source, followed by calcination to obtain the sodium-ion battery positive electrode material.

21. The preparation method according to claim 20, wherein a temperature of the calcination is 850°C to 1200°C, a time of the calcination is 6 to 30 hours, and an atmosphere of the calcination is an oxygen atmosphere or an air atmosphere.

22. The preparation method according to claim 21, wherein the calcination comprises: calcination at a first temperature for first duration, followed by cooling to a second temperature and calcination for second duration, wherein the first duration is less than the second duration.

23. A positive electrode plate, wherein the positive electrode plate comprises a positive electrode current collector and a positive electrode material layer disposed on at least one side of the positive electrode current collector, and the positive electrode material layer comprises the sodium-ion battery positive electrode material according to any one of claims 1 to 13, or the sodium-ion battery positive electrode material according to any one of claims 14 to 16, or the sodium-ion battery positive electrode material prepared according to any one of claims 20 and 21.

24. A sodium-ion battery, wherein the sodium-ion battery comprises a negative electrode plate and the positive electrode plate according to claim 23, and the sodium-ion battery further comprises a separator and a liquid electrolyte that are located between the positive electrode plate and the negative electrode plate.

25. A power-consuming device, wherein the power-consuming device comprises a power-consuming component and a power supply component, the power supply component supplies power to the power-consuming component, and the power supply component comprises the sodium-ion battery according to claim 24.

26. The power-consuming device according to claim 25, wherein the power-consuming device comprises an electronic device or a powered mobile apparatus.

27. An energy storage system, wherein the energy storage system comprises at least one battery group, and the battery group comprises a plurality of sodium-ion batteries according to claim 24.
